# EUROPEAN PATENT APPLICATION

(11) **EP 4 380 010 A1**
(43) Date of publication of application: **05.06.2024**
(21) Application number: 22878258.7
(22) Date of filing: 06.09.2022
(51) Int. Cl.: H02K 3/04, H02K 15/04, H02K 15/085

(54) **STATOR AND METHOD FOR MANUFACTURING STATOR**

(30) Priority: 07.10.2021 JP 2021165230; 31.03.2022 JP 2022060759
(71) Applicant: AISIN CORPORATION, Kariya-shi, Aichi 448-8650 (JP)
(72) Inventor: KAMIYA, Kenta, Kariya-shi, Aichi 448-8650 (JP); HIRAMATSU, Tomoko, Kariya-shi, Aichi 448-8650 (JP); HOSHINO, Akinori, Kariya-shi, Aichi 448-8650 (JP); KOBUCHI, Takahiro, Kariya-shi, Aichi 448-8650 (JP); TAKEMI, Tomohiko, Kariya-shi, Aichi 448-8650 (JP)
(74) Representative: Kramer Barske Schmidtchen Patentanwälte PartG mbB
(86) International application number: PCT/JP2022/033442
(87) International publication number: WO 2023/058387

(57) **Abstract**

In this stator, in each of a plurality of slots, a protruding length, in an axial direction, of each of protrusions of an outermost coil portion that is a linear coil portion on a radially outermost side and of an innermost coil portion that is a linear coil portion on a radially innermost side is shorter than a protruding length, in the axial direction, of protrusions of intermediate coil portions that are linear coil portions disposed between the outermost coil portion and the innermost coil portion.

## Description

### TECHNICAL FIELD

The present invention relates to a stator and a method for manufacturing the stator.

### BACKGROUND ART

Conventionally, a stator including segment coils is known. Such a stator is disclosed in, for example, JP 6742263 A.

The stator described in JP 6742263 A includes a stator core and a plurality of U-shaped segment coils inserted into slots of the stator core. Each of the segment coils has a protrusion protruding from a slot to one side in an axial direction. A connection end portion connected to a terminal coil is provided at one end of the protrusion in the axial direction. Connection end portions of the protrusions protruding from slots different from each other are connected by a terminal coil.

In the stator described in JP 6742263 A, a plurality of protrusions is disposed side by side along a radial direction in each of a plurality of slots. The stator described in JP 6742263 A discloses an example in which, in each of the plurality of slots, a protruding length of each of a radially outermost protrusion and a radially innermost protrusion is longer than a protruding length of a protrusion between the radially outermost protrusion and the radially innermost protrusion.

### CITATIONS LIST

### PATENT LITERATURE

Patent Literature 1: JP 6742263 A

### SUMMARY OF INVENTION

### TECHNICAL PROBLEMS

However, in the stator described in JP 6742263 A, the protruding lengths of the radially outermost protrusion of a slot and the radially innermost protrusion of the slot are long. Therefore, it is difficult to perform, from any direction in the radial direction, work such as, for example, bringing a terminal coil for connecting segment coils (protrusions) to each other close to the protrusion disposed between the radially outermost protrusion and the radially innermost protrusion, or irradiating the protrusion with laser light for joining the segment coil and the terminal coil. Therefore, there is a demand for a stator and a method for manufacturing the stator that facilitate work on the protrusion disposed between the radially outermost protrusion and the radially innermost protrusion, from both a radially inner side and a radially outer side.

The present invention has been made to solve the problems described above, and one object of the present invention is to provide a stator and a method for manufacturing the stator that facilitate work on a protrusion disposed between a radially outermost protrusion and a radially innermost protrusion, from both a radially inner side and a radially outer side.

### SOLUTIONS TO PROBLEMS

To achieve the above-described object, a stator according to a first aspect of the present invention includes a stator core including a plurality of slots extending in an axial direction, a segment coil portion including, in each of the plurality of slots, a plurality of linear coil portions disposed side by side in four or more along a radial direction of the stator core and linearly extending along the axial direction, in which each of the plurality of linear coil portions has a protrusion protruding from the slot to one side in the axial direction, and a busbar member including a plurality of busbars connecting to each other connection portions provided on the protrusions of the linear coil portions disposed on the slots different from each other, in which, in each of the plurality of slots, a protruding length, in the axial direction, of each of the protrusions of an outermost coil portion that is the linear coil portion on a radially outermost side and of an innermost coil portion that is the linear coil portion on a radially innermost side is shorter than a protruding length, in the axial direction, of the protrusions of intermediate coil portions that are the linear coil portions disposed between the outermost coil portion and the innermost coil portion.

In the stator according to the first aspect of the present invention, as described above, a protruding length of each of the protrusions of the outermost coil portion in the axial direction and innermost coil portion is shorter than protruding lengths of the intermediate coil portions of the protrusions in the axial direction. Thus, the intermediate coil portions are exposed from the outermost coil portion as viewed from a radially outer side, and the intermediate coil portions are exposed from the innermost coil portion as viewed from a radially inner side. As a result, it is possible to easily perform, from each of the radially outer side and the radially inner side, work such as, for example, bringing busbars close to the exposed portions of the intermediate coil portions, or irradiating the exposed portions with laser light for joining the intermediate coil portions and the busbars. That is, from both the radially outer side and the radially inner side, work can be easily performed on a protrusion disposed between a radially outermost protrusion and a radially innermost protrusion.

A method for manufacturing a stator, the method according to a second aspect of the present invention includes a step of disposing a segment coil portion including, in each of a plurality of slots extending of a stator core in an axial direction, a plurality of linear coil portions, such that a plurality of linear coil portions linearly extending along the axial direction is disposed side by side in four or more along a radial direction of the stator core, and that each of protrusions of the plurality of linear coil portions protrudes from the slot to one side in the axial direction, and a step of connecting, to the connection portions of the linear coil portion, each of a plurality of busbars connecting to each other connection portions provided on the protrusions of the linear coil portions disposed on the slots different from each other, in which the step of disposing the segment coil portion includes disposing the segment coil portion, such that, in each of the plurality of slots, a protruding length, in the axial direction, of each of the protrusions of an outermost coil portion that is the linear coil portion on a radially outermost side and of an innermost coil portion that is the linear coil portion on a radially innermost side is shorter than a protruding length, in the axial direction, of the protrusions of intermediate coil portions that are the linear coil portions disposed between the outermost coil portion and the innermost coil portion.

The method for manufacturing a stator, the method according to the second aspect of the present invention, includes, as described above, a step of disposing the segment coil portion such that a protruding length of each of the protrusions of the outermost coil portion and innermost coil portion in the axial direction is shorter than protruding lengths of the intermediate coil portions of the protrusions in the axial direction. Thus, the intermediate coil portions are exposed from the outermost coil portion as viewed from a radially outer side, and the intermediate coil portions are exposed from the innermost coil portion as viewed from a radially inner side. As a result, it is possible to easily perform, from each of the radially outer side and the radially inner side, work such as, for example, bringing busbars close to the exposed portions of the intermediate coil portions, or irradiating the exposed portions with laser light for joining the intermediate coil portions and the busbars. That is, it is possible to provide a method for manufacturing a stator that facilitates work on the protrusion disposed between the radially outermost protrusion and the radially innermost protrusion, from both a radially inner side and a radially outer side.

### ADVANTAGEOUS EFFECTS OF INVENTION

According to the present invention, it is possible to easily perform work on a protrusion disposed between a radially outermost protrusion and a radially innermost protrusion, from both the radially inner side and the radially outer side.

### BRIEF DESCRIPTION OF DRAWINGS

FIG. 1 is a perspective view showing a configuration of a stator according to a first embodiment.
FIG. 2 is a front view showing a configuration of a segment conductor according to the first embodiment.
FIG. 3 is a partially enlarged view of a vicinity of a slot in FIG. 1.
FIG. 4 is a partially enlarged plan view of a vicinity of a slot of the stator according to the first embodiment.
FIG. 5A is a perspective view of an outer busbar. FIG. 5B is a perspective view of an inner busbar.
FIG. 6 is a schematic view of a stator core according to the first embodiment as viewed from a radially outer side.
FIG. 7 is a schematic view of a linear coil portion (protrusion) of the slot according to the first embodiment as viewed from a circumferential direction.
FIG. 8 is a flowchart showing a method for manufacturing the stator according to the first embodiment.
FIG. 9 is a schematic view of a linear coil portion (protrusion) of a slot according to a first modification of the first to third embodiments as viewed from a circumferential direction.
FIG. 10 is a schematic view of a linear coil portion (protrusion) of a slot according to a second modification of the first to third embodiments as viewed from a circumferential direction.
FIG. 11 is a perspective view (1) showing a state of connection between a linear coil portion and outer busbar according to a modification of the first embodiment.
FIG. 12 is a perspective view (2) showing a state of connection between the linear coil portion and outer busbar according to the modification of the first embodiment.
FIG. 13 is a perspective view showing a configuration of a stator according to the second embodiment.
FIG. 14 is a perspective view showing a configuration of a linear coil portion according to the second embodiment.
FIG. 15 is a diagram for describing a protruding length of the linear coil portion according to the second embodiment.
FIG. 16 is a top view showing an outer bus ring and an inner bus ring according to the second embodiment.
FIG. 17 is a diagram of the outer bus ring according to the second embodiment as viewed from a radially outer side.
FIG. 18 is a diagram of the inner bus ring according to the second embodiment as viewed from a radially inner side.
FIG. 19 is a diagram for describing notched portions provided on a linear coil portion and an outer busbar.
FIG. 20 is a diagram for describing joint of an outer busbar and inner busbar to the linear coil portion, according to the second embodiment.
FIG. 21 is a flowchart showing a method for manufacturing the stator according to the second embodiment.
FIG. 22 is a top view showing a configuration of a stator according to the third embodiment.
FIG. 23 is a schematic view of a linear coil portion according to the third embodiment as viewed from a circumferential direction.

### DESCRIPTION OF EMBODIMENTS

Hereinafter, embodiments of the present invention will be described with reference to the drawings.

### [First embodiment]

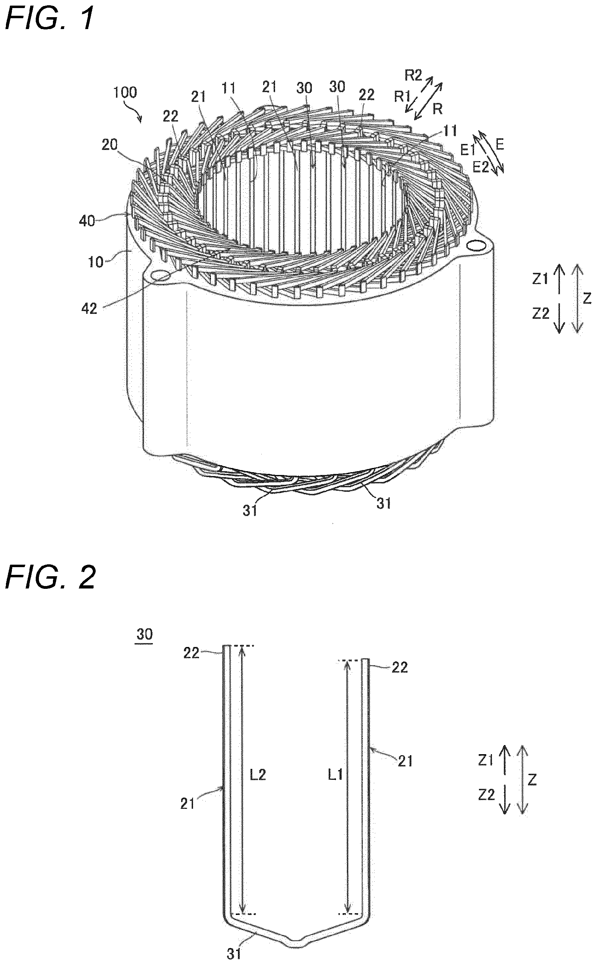

A stator 100 according to a first embodiment will be described with reference to FIGS. 1 to 8.

As shown in FIG. 1, the stator 100 is, for example, a stator used for an in-vehicle rotating electrical machine. The stator 100 includes a stator core 10 including a plurality of slots 11 extending in an axial direction (Z direction).

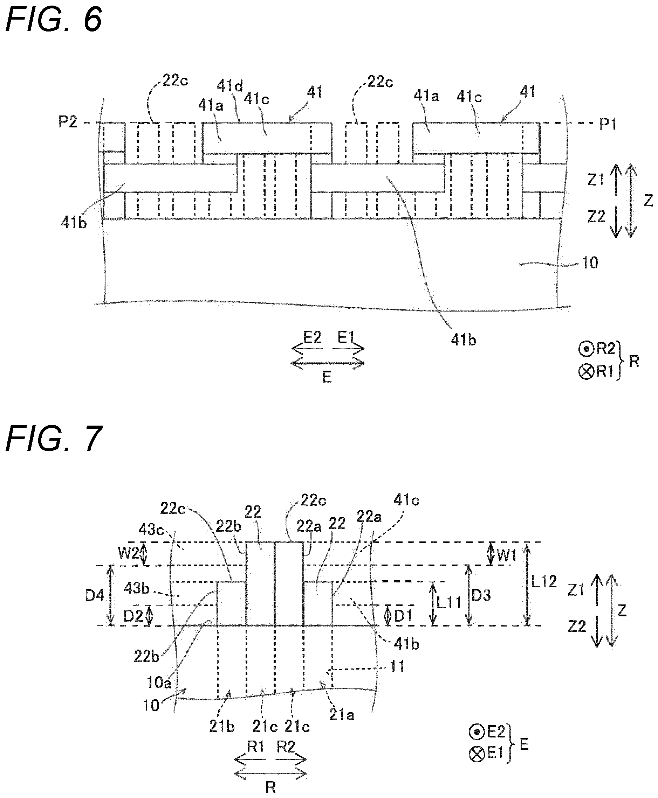

Furthermore, the stator 100 includes a segment coil portion 20. In each of the plurality of slots 11, the segment coil portion 20 includes a plurality of linear coil portions 21 disposed side by side in four along a radial direction (R direction) of the stator core 10 (refer to FIG. 7) and linearly extending along the axial direction. Each of the plurality of linear coil portions 21 has a protrusion 22 protruding from the slot 11 to one side (Z1 side) in the axial direction.

As shown in FIG. 2, the segment coil portion 20 includes a plurality of segment conductors 30. A segment conductor 30 has a U shape. The segment conductor 30 includes a pair of linear coil portions 21. Furthermore, the segment conductor 30 includes a coil end portion 31 connecting the pair of linear coil portions 21 at another side (Z2 side) of the stator core 10 in the axial direction.

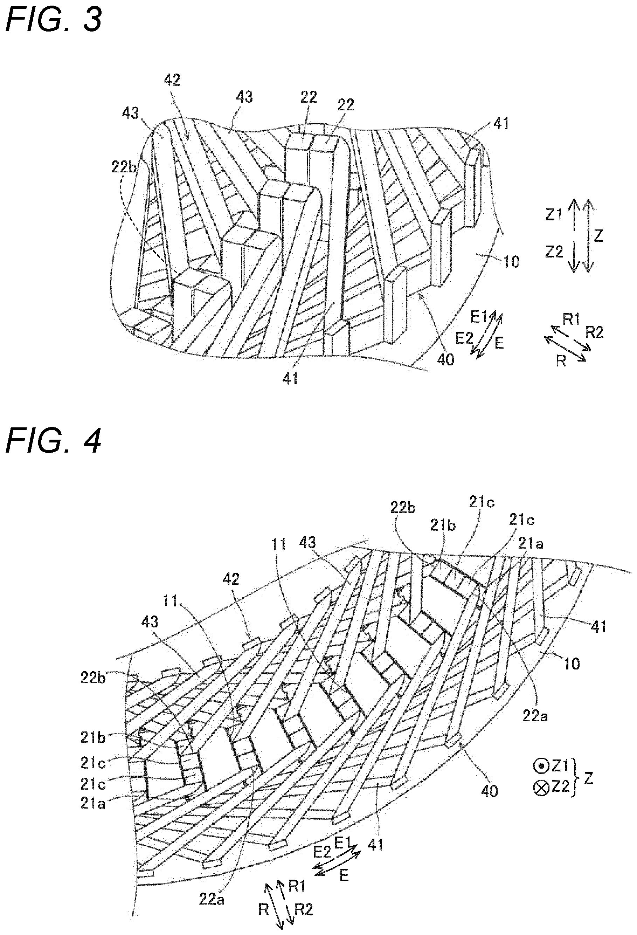

Furthermore, the pair of linear coil portions 21 is disposed on the slots 11 different from each other. Furthermore, a length L 1 of one of the pair of linear coil portions 21 and a length L2 of another one of the pair of linear coil portions 21 are different from each other. The length L1 of one linear coil portion 21 is shorter than the length L2 of the another linear coil portion 21. In each of the plurality of slots 11, each of an outermost coil portion 21a disposed on a radially outermost side (refer to FIG. 4) and an innermost coil portion 21b disposed on a radially innermost side (refer to FIG. 4) among the four linear coil portions 21 arranged in the radial direction is a linear coil portion 21 having the length L1. Furthermore, intermediate coil portions 21c disposed between the outermost coil portion 21a and the innermost coil portion 21b (refer to FIG. 4) are linear coil portions 21 having the length L2. One and another of a pair of linear coil portions 21 of a segment conductor 30, the pair of linear coil portions 21 being disposed on the radially outer side, are the outermost coil portion 21a and an intermediate coil portion 21c adjacent to the outermost coil portion 21a, respectively. Furthermore, one and another of a pair of linear coil portions 21 of the segment conductor 30, the pair of linear coil portions 21 being disposed on the radially inner side, are the innermost coil portion 21b and an intermediate coil portion 21c adjacent to the innermost coil portion 21b, respectively.

Furthermore, a protrusion 22 of each of the outermost coil portion 21a and the intermediate coil portion 21c adjacent to the outermost coil portion 21a includes an outer side surface 22a (refer to FIG. 4) provided so as to face radially outward (R2 side) on one side (Z1 side) in the axial direction. Furthermore, a protrusion 22 of each of the innermost coil portion 21b and the intermediate coil portion 21c adjacent to the innermost coil portion 21b includes an inner side surface 22b (refer to FIG. 4) provided so as to face radially inward (R1 side) on one side in the axial direction. That is, each of the outer side surface 22a and the inner side surface 22b is a surface provided so as to be orthogonal to the radial direction. Note that the outer side surface 22a is an example of a "connection portion" and "radial side surface" in the claims. Furthermore, the inner side surface 22b is an example of the "connection portion" and "radial side surface" in the claims.

Furthermore, as shown in FIG. 1, the stator 100 includes an outer bus ring 40 having an annular shape and including a plurality of outer busbars 41 (refer to FIG. 3). An outer busbar 41 connects, from the radially outer side, outer side surfaces 22a of protrusions 22 of linear coil portions 21 disposed on the slots 11 different from each other (refer to FIG. 4). An outer busbar 41 of the outer bus ring 40 connects an outer side surface 22a of an outermost coil portion 21a and an outer side surface 22a of an intermediate coil portion 21c adjacent to an outermost coil portion 21a, the coil portions being disposed on slots 11 different from each other. Furthermore, the outer bus ring 40 and an outer busbar 41 are an example of a "busbar member" and a "busbar", respectively, in the claims.

Furthermore, the stator 100 includes an inner bus ring 42 having an annular shape and including a plurality of inner busbars 43. An inner busbar 43 connects, from the radially inner side, inner side surfaces 22b of protrusions 22 of linear coil portions 21 disposed on slots 11 different from each other (refer to FIG. 4). An inner busbar 43 of the inner bus ring 42 connects an inner side surface 22b of an innermost coil portion 21b and an inner side surface 22b of an intermediate coil portion 21c adjacent to an innermost coil portion 21b, the coil portions being disposed on slots 11 different from each other. Furthermore, the inner bus ring 42 and an inner busbar 43 are an example of a "busbar member" and a "busbar", respectively, in the claims.

By connecting the outer busbar 41 (the inner busbar 43) to the outer side surface 22a (the inner side surface 22b) orthogonal to the radial direction as described above, an axial height of the stator 100 can be reduced as compared to a case where the outer busbar 41 (the inner busbar 43) is connected to an end surface 22c of the protrusion 22 in the axial direction (refer to FIG. 7).

Furthermore, the outer bus ring 40 and the inner bus ring 42 are provided separately from each other. That is, the outer bus ring 40 is a member separated from the inner bus ring 42. Note that the outer bus ring 40 may be formed integrally with the inner bus ring 42.

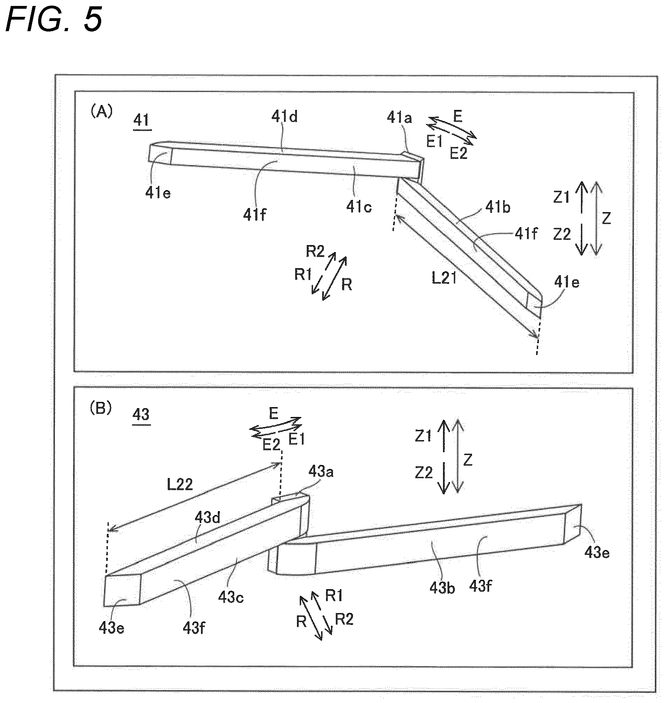

As shown in FIG. 5A, the outer busbar 41 has a V shape projecting radially outward (R2 side) as viewed from the Z1 side. The outer busbar 41 includes, at a center thereof, a central portion 41a extending along the axial direction (Z direction). Furthermore, the outer busbar 41 includes a first portion 41b linearly extending from the central portion 41a along one side (E2 side) in a circumferential direction, and a second portion 41c linearly extending from the central portion 41a along another side (E1 side) in the circumferential direction. Axial height positions of the first portion 41b and second portion 41c are shifted from each other. Thus, because the first portion 41b and second portion 41c of the outer busbars 41 different from each other are shifted from each other in the axial direction, the outer busbars 41 are prevented from interfering with each other.

Furthermore, connection surfaces 41e connected to outer side surfaces 22a of protrusions 22 are provided at both circumferential ends of the outer busbar 41. Each of the connection surfaces 41e is inclined radially outward (R2 side) with respect to an inner surface 41f of each of the first portion 41b and second portion 41c connecting the connection surfaces 41e and the central portion 41a.

Furthermore, a length of each of the first portion 41b and second portion 41c along a circumferential direction is a length L21.

As shown in FIG. 5B, the inner busbar 43 has a V shape projecting radially inward (R1 side) as viewed from the Z1 side. The inner busbar 43 includes, at a center thereof, a central portion 43a extending along the axial direction (Z direction). Furthermore, the inner busbar 43 includes a first portion 43b linearly extending from the central portion 43a along another side (E1 side) in the circumferential direction, and a second portion 43c linearly extending from the central portion 43a along one side (E2 side) in the circumferential direction. Axial height positions of the first portion 43b and second portion 43c are shifted from each other. Thus, because the first portion 43b and second portion 43c of the inner busbars 43 different from each other are shifted from each other in the axial direction, the inner busbars 43 are prevented from interfering with each other.

Furthermore, connection surfaces 43e connected to inner side surfaces 22b of protrusions 22 are provided at both circumferential ends of the inner busbar 43. Each of the connection surfaces 43e is inclined radially inward (R1 side) with respect to an inner surface 43f of each of the first portion 43b and second portion 43c connecting the connection surfaces 43e and the central portion 43a.

Furthermore, a length L22 of each of the first portion 43b and second portion 43c along the circumferential direction is shorter than the length L21 of each of the first portion 41b and second portion 41c of the outer busbar 41.

As shown in FIG. 6, five slots 11 (protrusions 22) are provided between the protrusions 22 connected by one outer busbar 41. Note that, although not shown for simplicity, a similar applies to the inner busbars 43.

Furthermore, a height position P1 in the axial direction of the end surfaces 22c of the protrusions 22 in the axial direction is substantially equal to a height position P2 of the end portions 41d on one side (Z1 side) of the outer busbars 41 in the axial direction. Note that, although not shown for simplicity, a height position of end portions 43d (refer to FIG. 5B) on one side in the axial direction of the inner busbars 43 in the axial direction is substantially equal to the height position P1 and the height position P2.

As shown in FIG. 7, in each of the plurality of slots 11, a protruding length L11 of each of the protrusions 22 of the outermost coil portion 21a and innermost coil portion 21b in the axial direction (Z direction) is shorter than a protruding length L12 of the intermediate coil portions 21c of the protrusions 22 in the axial direction.

Thus, an intermediate coil portion 21c is exposed from the outermost coil portion 21a as viewed from a radially outer side, and an intermediate coil portion 21c is exposed from the innermost coil portion 21b as viewed from a radially inner side. As a result, it is possible to easily perform, from each of the radially outer side and the radially inner side, work such as, for example, bringing busbars (41 and 43) close to the exposed portions of the intermediate coil portions 21c, or irradiating the exposed portions with laser light for joining the intermediate coil portions 21c and the busbars (41 and 43). That is, from both the radially outer side and the radially inner side, work can be easily performed on protrusions 22 disposed between a protrusion 22 on the radially outermost side and a protrusion 22 on the radially innermost side.

For example, because the protruding length L11 of the outermost coil portion 21a and innermost coil portion 21b is short, when the outer busbars 41 and the inner busbars 43 are fastened to the stator core 10 from the radial direction, it is not necessary to avoid the outermost coil portions 21a and the innermost coil portions 21b. Thus, because the outer busbars 41 and the inner busbars 43 can be easily aligned with respect to the stator core 10, the assembly work can be facilitated. Furthermore, when the outer bus ring 40 (the outer busbars 41) and the inner bus ring 42 (the inner busbars 43) are joined to the intermediate coil portions 21c, joint portions of the intermediate coil portions 21c can be easily irradiated with laser light from the radial direction. Furthermore, the assembly work can also be facilitated when the outer bus ring 40 and the inner bus ring 42 are fastened to the stator core 10 from the axial direction. This is because shortness of the protruding length L11 of the outermost coil portions 21a and innermost coil portions 21b prevents interference between the outer bus ring 40 and the outermost coil portions 21a and interference between the inner bus ring 42 and the innermost coil portions 21b, as much as possible.

A difference between the protruding length L11 and the protruding length L12 is larger than a width W1 of the outer busbar 41 (first portion 41b and second portion 41c) in the axial direction (3 mm, for example), and a width W2 of each of the inner busbars 43 (first portion 43b and second portion 43c) in the axial direction (3 mm, for example). Specifically, the difference between the protruding length L11 and the protruding length L12 is larger than a sum of the width W1 (width W2) and an insulation distance (for example, 2 mm) between the outer busbars 41 (inner busbars 43). Thus, the outer busbars 41 (the inner busbars 43) disposed to overlap each other in the axial direction can be reliably insulated from each other. Note that the width W1 of the outer busbar 41 and the width W2 of the inner busbar 43 are substantially equal to each other.

Furthermore, the outer side surface 22a of the outermost coil portion 21a is connected to the first portion 41b of the outer busbar 41, in which an axial separation distance between the first portion 41b and an end surface 10a one side (Z1 side) in the axial direction of the stator core 10 is a distance D1. Furthermore, the inner side surface 22b of the innermost coil portion 21b is connected to the first portion 43b of the inner busbar 43, in which an axial separation distance between the first portion 43b and an end surface 10a of the stator core 10 is a distance D2. The outer side surface 22a of the intermediate coil portion 21c on the radially outer side, of the two intermediate coil portions 21c, is connected to the second portion 41c of the outer busbar 41, in which an axial separation distance between the second portion 41c and the end surface 10a in the axial direction is a distance D3, which is longer than the distance D1. Furthermore, the inner side surface 22b of the intermediate coil portion 21c on the radially inner side, of the two intermediate coil portions 21c, is connected to the second portion 43c of the inner busbar 43, in which an axial separation distance between the second portion 43c and the end surface 10a in the axial direction is a distance D4, which is longer than the distance D2. Note that the distance D1 and the distance D2 are substantially equal to each other. Furthermore, the distance D3 and the distance D4 are substantially equal to each other.

Thus, it is possible to connect the outermost coil portion 21a and innermost coil portion 21b having the protruding length L11, which is relatively short, to the first portion 41b of the outer busbar 41 and the first portion 43b of the inner busbar 43, respectively, the first portion 41b and the first portion 43b having relatively short separation distances (D1 and D2) to the end surface 10a. Furthermore, it is possible to connect the intermediate coil portions 21c having the protruding length L12, which is relatively long, to the second portion 41c of the outer busbar 41 and second portion 43c of the inner busbar 43 having relatively long separation distances (D3 and D4) to the end surface 10a. As a result, it is possible to prevent the first portion 41b and the second portion 41c from intersecting with each other in the axial direction, and prevent the first portion 43b and the second portion 43c from intersecting with each other in the axial direction. Thus, it is possible to prevent complicated configurations of each of the outer bus ring 40 and the inner bus ring 42.

Furthermore, as shown in FIG. 4, each of the outer bus ring 40 and the inner bus ring 42 is disposed so as to avoid the intermediate coil portions 21c as viewed from the Z1 side.

Thus, it is possible to easily perform, from the Z1 side, work such as bringing a member close to the intermediate coil portions 21c, or irradiating the intermediate coil portions 21c with laser light. Furthermore, it is possible to easily check, from the Z1 side, connection states between the intermediate coil portions 21c and each of the outer busbar 41 and the inner busbar 43.

Specifically, the outer bus ring 40 is disposed radially outward (R2 side) with respect to the two intermediate coil portions 21c, as viewed from the Z1 side. Furthermore, the inner bus ring 42 is disposed radially inward (R1 side) with respect to the two intermediate coil portions 21c, as viewed from the Z1 side. Thus, the two intermediate coil portions 21c do not overlap each of the outer bus ring 40 and the inner bus ring 42 in the axial direction. That is, each of the two intermediate coil portions 21c is exposed overall, as viewed from the Z1 side.

Furthermore, as shown in FIG. 6, the protruding length L11 of the outermost coil portion 21a (refer to FIG. 7), the protruding length L11 of the innermost coil portion 21b, and the protruding length L12 of the intermediate coil portions 21c (refer to FIG. 7) are equal to each other for the plurality of slots 11. That is, a total value of the protruding lengths of the protrusions 22 is equal to each other for the plurality of slots 11.

Thus, it is possible to uniform resistance of the segment conductors 30 of the respective slots 11.

Furthermore, the segment coil portion 20 is formed of copper, and each of the outer bus ring 40 and the inner bus ring 42 is formed of aluminum.

Thus, because aluminum is lighter than copper, it is possible to reduce weight of the stator 100 as compared to a case where each of the outer bus ring 40 and the inner bus ring 42 is formed of copper. In particular, in a case where the stator 100 is used for an in-vehicle motor, weight reduction is particularly effective.

In this case, a cross-sectional area (an area of a cross section orthogonal to a direction in which current flows) of each of the outer busbar 41 and inner busbar 43 formed of aluminum is larger than a cross-sectional area (an area of a cross section orthogonal to a direction in which current flows) of the segment conductor 30 formed of copper. Specifically, the cross-sectional area of each of the outer busbar 41 and the inner busbar 43 is set to be larger than the cross-sectional area of the segment conductor 30, such that resistance of each of the outer busbar 41 and inner busbar 43 and resistance of the segment conductor 30 are equal to each other.

### (Method for manufacturing stator)

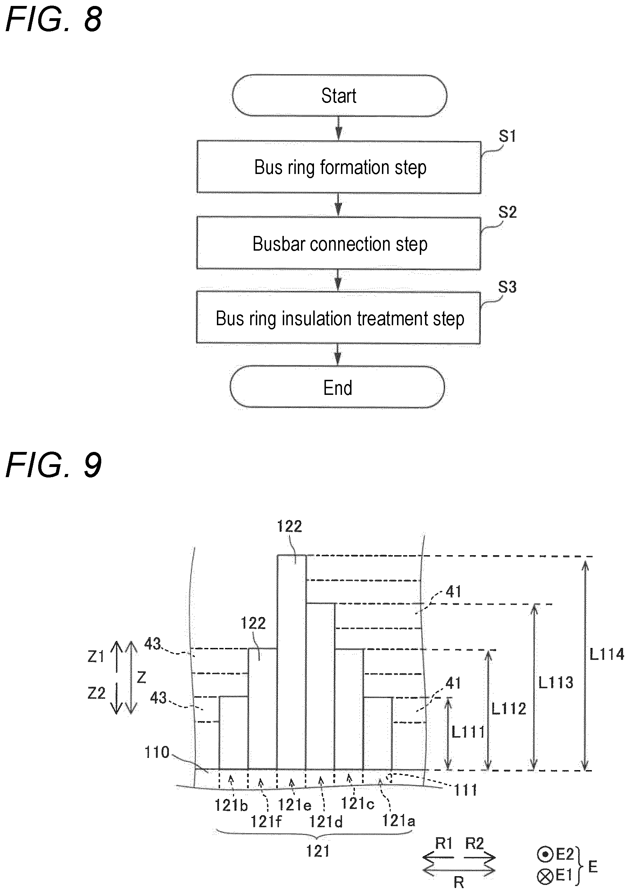

Next, a method for manufacturing the stator 100 will be described with reference to FIG. 8.

### (Bus ring formation step)

As shown in FIG. 8, first, in Step S1, a step of forming each of the outer bus ring 40 and the inner bus ring 42 is performed. Specifically, the outer bus ring 40 is formed by combining the plurality of outer busbars 41, and the inner bus ring 42 is formed by combining the plurality of inner busbars 43.

### (Busbar connection step)

Next, in Step S2, a step of connecting the outer busbar 41 of the outer bus ring 40 to each of the outermost coil portion 21a and the intermediate coil portion 21c adjacent to the outermost coil portion 21a. Furthermore, in Step S2, a step of connecting the inner busbar 43 of the inner bus ring 42 to each of the innermost coil portion 21b and the intermediate coil portion 21c adjacent to the innermost coil portion 21b. For example, a busbar and a coil portion are joined by irradiating a connection portion between the busbar and the coil portion with laser light. In this case, the laser light is emitted, for example, from one side (Z1 side) in the axial direction.

### (Bus ring insulation treatment step)

Then, in Step S3, a step of performing insulation treatment on each of the outer bus ring 40 and the inner bus ring 42 is performed. For example, insulation treatment is performed by applying varnish to each of the outer bus ring 40 and the inner bus ring 42. Furthermore, the Insulation treatment may be performed by sealing each of the outer bus ring 40 and the inner bus ring 42 with resin molding. Furthermore, in a state where the connection surfaces (41e and 43e) are exposed and a portion other than the connection surfaces (41e and 43e) is fixed by the resin molding, the outer bus ring 40 (inner bus ring 42) may be disposed on the stator core 10, and the outer bus ring 40 (inner bus ring 42) and the linear coil portions 21 may be joined.

### [Second embodiment]

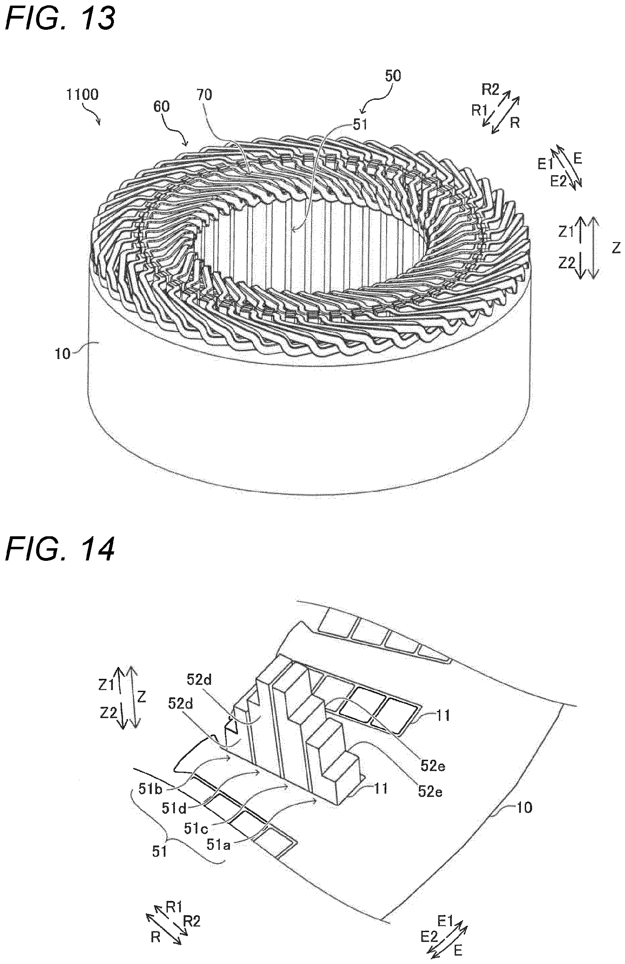

Next, a stator 1100 according to a second embodiment will be described with reference to FIGS. 13 to 20. In the second embodiment, outer busbars 61 of an outer bus ring 60 and inner busbars 71 of an inner bus ring 70 are configured to be connected to protrusions 52 of linear coil portions 51 from a circumferential direction side, unlike the first embodiment in which the outer busbars 41 of the outer bus ring 40 are configured to connect to each other the outer side surfaces 22a of the protrusions 22 of the linear coil portions 21 from the radially outer side, and the inner busbars 43 of the inner bus ring 42 are configured to connect to each other the inner side surfaces 22b of the protrusions 22 of the linear coil portions 21 from the radially inner side. Note that, in the drawings, components similar to components in the first embodiment described above are denoted by the same reference signs, and description thereof will be omitted.

As shown in FIG. 13, the stator 1100 according to the second embodiment includes a stator core 10, a segment coil portion 50, an outer bus ring 60, and an inner bus ring 70. As with the segment coil portion 20 of the first embodiment, the segment coil portion 50 includes a plurality of linear coil portions 51. In the stator 1100, a lap-wound coil is formed by connecting the segment coil portion 50, the outer bus ring 60, and the inner bus ring 70. Note that the outer bus ring 60 and the inner bus ring 70 are an example of a "busbar member" in the claims.

### <Linear coil portion>

As shown in FIG. 14, four linear coil portions 51 are disposed side by side in each of the plurality of slots 11. Specifically, four coil portions, which are an outermost coil portion 51a, an intermediate coil portion 51c, an intermediate coil portion 51d, and an innermost coil portion 51b, are disposed side by side in this order from a radially outer side (R2 direction side) along a radial direction. Note that only linear coil portions 51 disposed on one slot 11 are shown in FIG. 14.

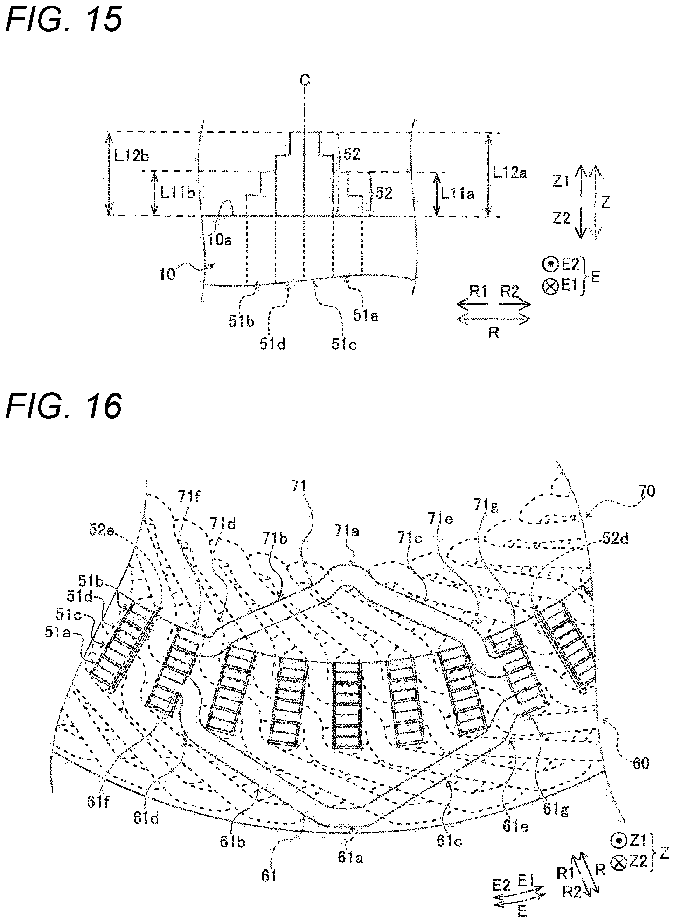

Then, as shown in FIG. 15, in the plurality of linear coil portions 51 of the segment coil portion 50, in each of the plurality of slots 11, a protruding length L11a of the protrusion 52 of the outermost coil portion 51a in an axial direction (Z direction) and a protruding length L11b of the protrusion 52 of the innermost coil portion 51b in the axial direction (Z direction) are substantially the same as each other. Furthermore, the protruding lengths L11a and L11b are disposed to be shorter than a protruding length L12a and protruding length L12b of the protrusions 52 of the intermediate coil portions 51c and 51d, respectively, in the axial direction (Z direction). For example, a difference between the protruding lengths L11a and L11b and the protruding lengths L12a and L12b is larger than widths of the outer busbars 61 and inner busbars 71 in the axial direction (Z direction).

Here, in a case where the protruding length L11a of the outermost coil portion 51a and the protruding length L11b of the innermost coil portion 51b are different from each other, a size (height) of the entire stator 1100 in the axial direction (Z direction) is large by a difference between the protruding length L11a and the protruding length L11b. Meanwhile, in the present embodiment, the protruding length L11a of the outermost coil portion 51a and the protruding length L11b of the innermost coil portion 51b are substantially the same as each other, and thus the size (height) of the entire stator 1100 in the axial direction (Z direction) can be reduced as compared to a case where the protruding length L11a and the protruding length L11b are different from each other.

Furthermore, in the plurality of linear coil portions 51, each of the plurality of slots 11 is disposed such that the protruding lengths L12a and L12b of each of the protrusions 52 of the two intermediate coil portions 51c and 5 1d in the axial direction (Z direction) are substantially the same as each other.

Here, in a case where the protruding length L 12a of the intermediate coil portion 51c and the protruding length L12b of the intermediate coil portion 51d are different from each other, the size (height) of the entire stator 1100 in the axial direction (Z direction) is large by a difference between the protruding length L12a and the protruding length L12b. Meanwhile, in the present embodiment, the protruding length L 12a of the intermediate coil portion 51c and the protruding length L 12b of the intermediate coil portion 51d are substantially the same as each other, and thus the size (height) of the entire stator 1100 in the axial direction (Z direction) can be further reduced as compared to a case where the protruding length L12a and the protruding length L12b are different from each other.

Furthermore, in each of the plurality of slots 11, the plurality of (four) linear coil portions 51 is disposed in a mound shape so as to have a substantially line-symmetric shape with an axis C passing through a center position of the plurality of linear coil portions 51 arranged in the radial direction (R direction) and extending in the axial direction (Z direction) as a symmetry axis, as viewed from the circumferential direction side (E direction) of the stator core 10. The axis C extends in the Z direction in the middle between the intermediate coil portion 51c and the intermediate coil portion 51d.

Thus, because the four linear coil portions 51 are disposed side by side so as to have a substantially line-symmetric shape (arrangement relation) with the axis C denoting the center position in the radial direction (R direction) as the symmetry axis, a size (height) of the outer bus ring 60 in the axial direction (Z direction), the outer bus ring 60 being connected to two linear coil portions 51 on a radially outer side (R2 direction side), and a size (height) of the inner bus ring 70 in the axial direction (Z direction), the inner bus ring 70 being connected to two linear coil portions 51 on the radially inner side (R1 direction side), can be substantially the same. Therefore, unlike a case where the sizes of the outer bus ring 60 and inner bus ring 70 in the axial direction are different from each other, the size of the entire stator 1100 in the axial direction can be reduced.

Furthermore, as shown in FIG. 14, each of the protrusions 52 (refer to FIG. 15) of the plurality of linear coil portions 51 has a side surface 52d and a side surface 52e provided so as to be orthogonal to the circumferential direction (E direction). The side surface 52d is provided so as to face one side (E2 direction side) in the circumferential direction. Furthermore, the side surface 52e is provided so as to face another side (E1 direction side) in the circumferential direction. Note that the side surface 52d and the side surface 52e are an example of a "circumferential side surface" and a "connection portion" in the claims.

### <Outer bus ring and inner bus ring>

As shown in FIG. 16, the outer bus ring 60 of the stator 1100 includes a plurality of outer busbars 61 and has an annular shape (refer to FIG. 13). The outer bus ring 60 connects side surfaces (side surface 52d and side surface 52e) of protrusions 52 of linear coil portions 51 disposed on slots 11 different from each other. Furthermore, the outer busbars 61 are an example of a "busbar" in the claims.

Furthermore, the inner bus ring 70 of the stator 1100 includes a plurality of inner busbars 71 and has an annular shape (refer to FIG. 13). The inner bus ring 70 connects side surfaces (side surface 52d and side surface 52e) of protrusions 52 of linear coil portions 51 disposed on slots 11 different from each other. Furthermore, the inner busbars 71 are an example of a "busbar" in the claims.

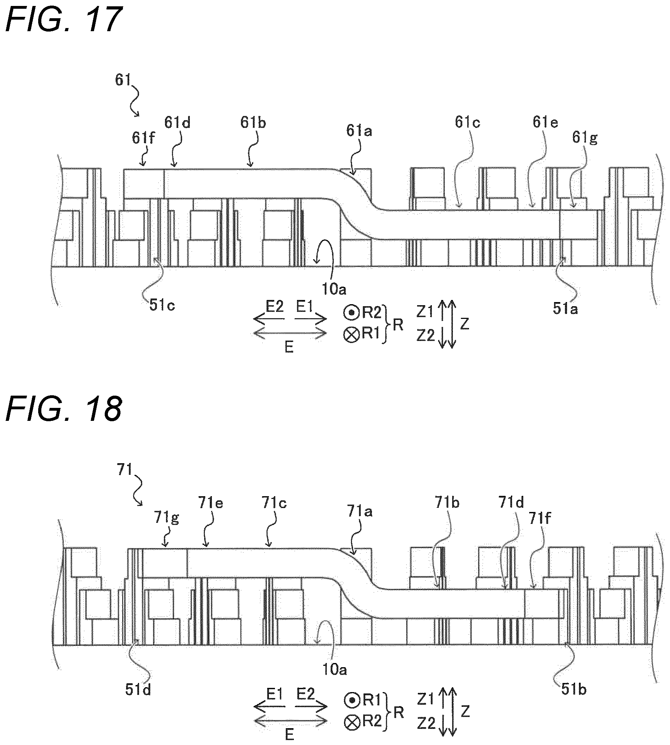

Specifically, as shown in FIGS. 16 and 17, each of the outer busbars 61 of the outer bus ring 60 has a central portion 61a, a first portion 61b, a second portion 61c, a third portion 61d, a fourth portion 61e, an end portion 61f, and an end portion 61g. Furthermore, in the outer busbar 61, the end portion 61g is connected to the outermost coil portion 51a on the E1 direction side, and the end portion 61f is connected to the intermediate coil portion 51c adjacent to the outermost coil portion 51a on the E2 direction side. Note that the end portion 61f is an example of "both end portions" and "first end portion" in the claims. Furthermore, the end portion 61g is an example of "both end portions" and "second end portion" in the claims.

The first portion 61b is a portion linearly extending on the E2 direction side of the outer busbar 61. Furthermore, the second portion 61c is a portion linearly extending on the E1 direction side of the outer busbar 61. Specifically, the first portion 61b and the second portion 61c extend along a direction inclined radially outward (R2 direction side) from the circumferential direction (E direction). That is, the first portion 61b and the second portion 61c are combined by the central portion 61a to linearly extend so as to have a V shape as viewed from the axial direction. Furthermore, the first portion 61b and the second portion 61c linearly extend along a plane (ER plane) parallel to the end surface 10a of the stator core 10 in the axial direction (Z1 direction). Furthermore, in the axial direction (Z direction), the first portion 61b is disposed at a position spaced apart from the stator core 10 toward the Z1 direction side as compared to a position where the second portion 61c is disposed. Specifically, a position (height) of an end surface of the first portion 61b on a Z1 direction side is substantially the same as a position of an upper end surface (end surface on the Z1 direction side) of the intermediate coil portion 51c. That is, the distance between the end surface of the first portion 61b on the Z1 direction side and the end surface 10a of the stator core 10 on the Z1 direction side is substantially equal to the protruding length L 12a of the intermediate coil portion 51c. Furthermore, a position (height) of an end surface of the second portion 61c on a Z1 direction side is substantially the same as a position of an upper end surface (end surface on the Z1 direction side) of the outermost coil portion 51a. That is, the distance between the end surface of the second portion 61c on the Z1 direction side and the end surface 10a of the stator core 10 on the Z1 direction side is substantially equal to the protruding length L11a of the outermost coil portion 51a.

Then, the central portion 61a is combined with the first portion 61b and the second portion 61c, thereby being curved so as to project outward in the radial direction (toward the R2 direction side) as viewed from the axial direction (Z1 direction side). Furthermore, the central portion 61a has a curved shape so as to connect the first portion 61b and the second portion 61c as viewed from the axial direction (Z1 direction side). That is, the central portion 61a has a shape that is curved so as to project toward the R2 direction side, while being curved from an extending direction of the first portion 61b to an axial direction side (Z2 direction side) and then curved again in the extending direction of the second portion 61c so as to connect the first portion 61b and the second portion 61c at different positions (heights) in the Z direction.

Furthermore, on the E2 direction side of the first portion 61b, the third portion 61d curved in a direction along the radial direction (R direction) is provided such that the end portion 61f is connected to the intermediate coil portion 51c. Specifically, the third portion 61d is curved radially inward (R1 direction side) from the extending direction of the first portion 61b so as to avoid the slots 11 of the stator core 10 as viewed from the axial direction (Z1 direction side). Then, the third portion 61d is curved again toward the side surface 52e of the intermediate coil portion 51c while avoiding the slots 11 (linear coil portions 51) (so as not to overlap) as viewed from the axial direction (Z1 direction side). Note that the third portion 61d is curved along a plane (ER plane) parallel to the end surface 10a of the stator core 10 on the Z 1 direction side, so as not to change in position (height) in the axial direction (Z direction).

Furthermore, similarly on the E1 direction side of the second portion 61c, the fourth portion 61e curved in a direction along the radial direction (R direction) is provided such that the end portion 61g is connected to the outermost coil portion 51a. Specifically, as with the third portion 61d, the fourth portion 61e is curved radially inward (R1 direction side) from the extending direction of the second portion 61c so as to avoid the slots 11 of the stator core 10 as viewed from the axial direction (Z1 direction side). Then, the fourth portion 61e is curved again toward the side surface 52d of the outermost coil portion 51a while avoiding the slots 11 (linear coil portions 51) (so as not to overlap) as viewed from the axial direction (Z1 direction side). Note that, as with the third portion 61d, the fourth portion 61e is curved along a plane (ER plane) parallel to the end surface 10a of the stator core 10 on the Z 1 direction side, so as not to change in position (height) in the axial direction (Z direction).

The end portion 61f of the outer busbar 61 is provided to extend from the third portion 61d, along one side (E2 direction side) in the circumferential direction. Furthermore, the end portion 61g is provided to extend from the fourth portion 61e, along another side (E1 direction side) in the circumferential direction. Then, the end portion 61f abuts on with the side surface 52e of a linear coil portion 51 (intermediate coil portion 51c). Furthermore, the end portion 61g abuts on the side surface 52d of a linear coil portion 51 (outermost coil portion 51a). Details of an abutting structure of a joint portion between the end portion 61f and the end portion 61g will be described later.

Furthermore, as shown in FIGS. 16 and 18, as with the outer busbars 61, each of the inner busbars 71 of the inner bus ring 70 has a central portion 71a, a first portion 71b, a second portion 71c, a third portion 71d, a fourth portion 71e, an end portion 71f, and an end portion 71g. Furthermore, in the inner busbar 71, the end portion 71g is connected to the intermediate coil portion 51d adjacent to the innermost coil portion 51b on the E1 direction side, and the end portion 71f is connected to the innermost coil portion 51b on the E2 direction side. Note that the end portion 71f is an example of "both end portions" and "first end portion" in the claims. Furthermore, the end portion 71g is an example of "both end portions" and "second end portion" in the claims.

In the inner busbar 71, as with the outer busbar 61, the first portion 71b on the E2 direction side and the second portion 71c on the E1 direction side linearly extend along the ER plane. Then, the central portion 71a has a shape that projects toward the radially inner side (R1 direction side) as viewed from the axial direction (Z1 direction side) so as to connect the first portion 71b and the second portion 71c, while being curved so as to connect the first portion 71b and the second portion 71c at different positions (heights) in the Z direction. That is, first portion 71b and second portion 71c are different in height from the end surface 10a of the stator core 10, as with the first portion 61b and second portion 61c of the outer busbar 61. Then, a distance between an end surface of the first portion 71b on the Z1 direction side and the end surface 10a of the stator core 10 on the Z1 direction side is substantially equal to the protruding length L11b of the innermost coil portion 51b. Furthermore, a distance between an end surface of the second portion 71c on the Z1 direction side and the end surface 10a of the stator core 10 on the Z1 direction side is substantially equal to the protruding length L 12b of the intermediate coil portion 51d.

Furthermore, as with the outer busbar 61, the third portion 71d is curved from the first portion 71b toward a side surface 52e the innermost coil portion 51b while avoiding the slots 11 as viewed from the axial direction (Z1 direction side). Similarly, the fourth portion 71e is curved from the second portion 71c toward a side surface 52d the intermediate coil portion 51d while avoiding the slots 11 as viewed from the axial direction (Z1 direction side). Then, the end portion 71f and the end portion 71g are provided to extend along the circumferential direction so as to abut on the side surface 52e and the side surface 52d, respectively, in the circumferential direction. Details of an abutting structure of a joint portion between the end portion 71f and the end portion 71g will be described later.

As described above, the end portion 61f and end portion 61g of the outer busbar 61, and end portion 71f and end portion 71g of the inner busbar 71 abut on the side surface 52e and the side surface 52d in the circumferential direction. Thus, it is possible to connect the outer busbars 61 and the inner busbars 71 to the plurality of (four) linear coil portions 51 arranged along the radial direction (R direction), from the circumferential direction side (E direction side) that is different from a direction in which the linear coil portions 51 are arranged. Therefore, joint portions (connection portions), to the outer busbar 61, of the two linear coil portions 51 (the outermost coil portion 51a and intermediate coil portion 51c) to be connected to the outer busbar 61 and joint portions (connection portions), to the inner busbar 71, of the two linear coil portions 51 (the innermost coil portion 51b and intermediate coil portion 51d) to be connected to the inner busbar 71 can be exposed as viewed from the axial direction (Z1 direction). As a result, when the outer busbar 61 and the inner busbar 71 are joined to the linear coil portions 51, the joint portions can be easily irradiated with laser light or an ultrasonic wave from the axial direction side.

Furthermore, each of the plurality of outer busbars 61 has a shape obtained by bending one quadrangular columnar conductor having a substantially uniform thickness (width). Similarly, each of the plurality of inner busbars 71 has a shape obtained by bending one quadrangular columnar conductor. Note that the plurality of outer busbars 61 and the plurality of inner busbars 71 have substantially the same width (thickness).

Furthermore, the end portion 61f of the outer busbar 61 is connected to one linear coil portion 51 (intermediate coil portion 51c) disposed on one slot 11 among the plurality of slots 11. Then, the end portion 61g, which is another end portion of the outer busbar 61, is connected to another linear coil portion 51 (outermost coil portion 51a) disposed on another slot 11. For example, five slots 11 are sandwiched between the one slot 11 and the another slot 11. Then, the side surface 52e of one linear coil portion 51 (intermediate coil portion 51c) connected to the end portion 61f and a side surface 52d of the another linear coil portion 51 (outermost coil portion 51a) connected to the end portion 61g are provided so as to face each other along the circumferential direction (E direction). Note that, similarly in the inner busbar 71, the end portion 71f of the inner busbar 71 is connected to the side surface 52e of the innermost coil portion 51b of one linear coil portion 51. Then, the end portion 71g is connected to the side surface 52d of the intermediate coil portion 5 1d of the another linear coil portion 51. That is, as with the outer busbar 61, the inner busbar 71 connects side surfaces (the side surface 52e and the side surface 52d) facing each other along the circumferential direction.

Thus, it is possible to reduce lengths of conductors of the outer busbar 61 and inner busbar 71, as compared to a case where the outer busbar 61 and the inner busbar 71 are configured to connect to each other side surfaces (the side surfaces 52d or the side surfaces 52e) on the same direction side of the protrusions 52 of the linear coil portions 51 in the circumferential direction (E direction). Therefore, an increase in electrical loss in the outer busbar 61 and inner busbar 71 can be reduced.

Note that each of the central portion 61a of the plurality of outer busbars 61 is curved so as to have a common curved shape as viewed from the axial direction (Z1 direction side). Thus, in a case where the annular outer bus ring 60 is formed by combining the plurality of outer busbars 61, jigs for holding the central portion 61a of each of the plurality of outer busbars 61 can have a common shape. Therefore, a structure of the jigs for holding the outer busbars 61 can be less complicated, and thus an outer bus ring 60 having an annular shape can be easily formed. Furthermore, as with the outer bus ring 60, each of the central portion 71a of the plurality of inner busbars 71 of the inner bus ring 70 is also curved so as to have a common curved shape as viewed from the axial direction (Z1 direction side). Thus, because a structure of the jigs for holding the inner busbars 71 can be less complicated as with formation of the outer bus ring 60, and thus an inner bus ring 70 having an annular shape can be easily formed.

Specifically, the plurality of outer busbars 61 of the outer bus ring 60 has a common shape. Similarly, the plurality of inner busbars 71 of the inner bus ring 70 has a common shape.

Thus, because the plurality of outer busbars 61 has a common shape, the plurality of outer busbars 61 can be easily manufactured as compared to a case where the plurality of outer busbars 61 has shapes different from each other. Furthermore, because the outer bus ring 60 having an annular shape can be formed by the plurality of outer busbars 61 having a common shape, the outer bus ring 60 can have an annular shape having a periodic structure. Therefore, as compared to a case where the outer busbars 61 have shapes different from each other, the jigs for holding the outer busbars 61 to form the outer bus ring 60 can be less complicated, and thus the outer bus rings 60 can be easily formed. Similarly, because the plurality of inner busbars 71 has shapes substantially the same as each other in the inner bus ring 70, the plurality of inner busbars 71 can be easily manufactured, and the inner bus ring 70 can be easily formed.

### <Details of abutting structure of joint portion>

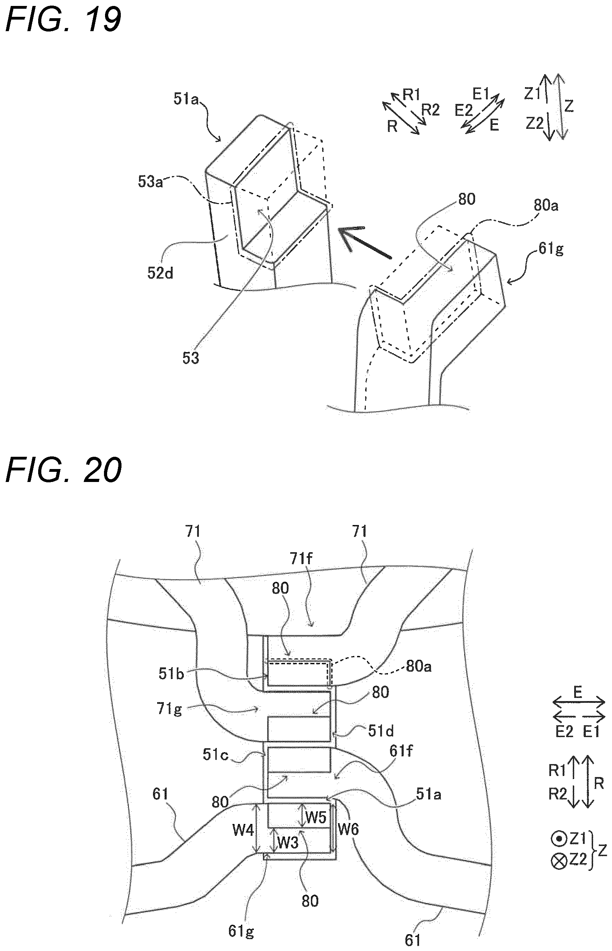

As shown in FIGS. 19 and 20, each of the end portion 61f and end portion 61g of the outer busbars 61 includes a notched portion 80. Similarly, each of the end portion 71f and end portion 71g of the inner busbar 71 includes a notched portion 80. The notched portions 80 have a shape in which end portions 61f and 61g and end portions 71f and 71g are partially notched. Specifically, the notched portion 80 is connected to the side surfaces 52d and 52e so as to have the connection surface 80a having an L shape along the radial direction (R direction) and circumferential direction (E direction) as viewed from the axial direction (Z direction). Note that the notched portion 80 is an example of a "busbar-side notched portion" in the claims.

Thus, because the outer busbar 61 and the inner busbar 71 are provided with the notched portion 80 having the connection surface 80a having an L shape along the radial direction (R direction) and the circumferential direction (E direction), both portions of the connection surface 80a having an L shape, the portions being on a radial direction side and on the circumferential direction side, can abut on contact with the linear coil portion 51. Therefore, it is possible to increase an area of a portion where the linear coil portion 51, the outer busbar 61, and the inner busbar 71 are joined to one another, as compared to a case where the notched portion 80 is not provided. As a result, electrical resistance at the joint portion can be reduced, by which electrical loss at the joint portion can be reduced, and heat generation at the joint portion can be reduced.

Furthermore, the side surface 52d and side surface 52e (connection portions) of the linear coil portion 51 have a notched portion 53 that is partially notched. The notched portion 53 is connected so as to engage with the notched portions 80 of the outer busbar 61 and inner busbar 71, so as to have a connection surface 53a having an L shape along the radial direction (R direction) and axial direction (Z direction) as viewed from the circumferential direction (E direction). Note that the notched portion 53 is an example of a "connection portion-side notched portion" in the claims.

Thus, because the notched portion 53 is provided on a linear coil portion 51 side in addition to the notched portion 80 of the outer busbar 61 and inner busbar 71, areas of portions joined to each other can be further increased. Therefore, electrical resistance at the joint portions can be further reduced, by which electrical loss at the joint portions can be further reduced, and heat generation at the joint portions can be further reduced.

As shown in FIG. 20, the outer busbars 61 connected to the outermost coil portion 51a and the intermediate coil portion 51c have the notched portions 80 obtained by notching a radially inner side (R1 direction side) of the end portions 61f and 61g. Furthermore, the inner busbars 71 connected to the innermost coil portion 51b and the intermediate coil portion 51d have the notched portions 80 obtained by notching a radially outer side (R2 direction side) of the end portions 71f and 71g. Therefore, the linear coil portion 51 is provided with the notched portion 53 obtained by notching a radially outer side (R2 direction side) of the outermost coil portion 51a and intermediate coil portion 51c so as to engage with the notched portion 80. Furthermore, the innermost coil portion 51b and the intermediate coil portion 51d are provided with the notched portion 53 obtained by notching a radially inner side (R1 direction side).

Specifically, the notched portions 80 of the outer busbars 61 and the inner busbars 71 are notched in the circumferential direction (E direction) from tip end portions of the end portions 61f and 61g and the end portions 71f and 71g, by a size substantially the same as a width of the linear coil portion 51. Then, in the Z direction, the notched portion 80 is notched from a plane of the outer busbar 61 and inner busbar 71 on the Z1 direction side, over a plane on the Z2 direction side. Furthermore, the notched portion 53 of the linear coil portion 51 is notched from the end portion (end surface) on the Z1 direction side, by a size substantially the same as a width of the outer busbar 61 and inner busbar 71 in the Z direction. Then, the notched portion 53 is notched from the E1 direction side to the E2 direction side (from the side surface 52d to the side surface 52e) in the circumferential direction.

Furthermore, a width W3 (thickness) in the radial direction (R direction) of the notched portion 80 is substantially half a width W4 of a portion other than the notched portions 80 of the outer busbars 61 (inner busbars 71) as viewed from the axial direction. Furthermore, a width W5 of the notched portion 53 of the linear coil portion 51 in the radial direction is also substantially half a width W6 of a portion other than the notched portion 53 of the linear coil portion 51 in the radial direction. Here, the width W6 of the linear coil portion 51 in the radial direction is substantially equal to the width W4 of the outer busbar 61. Therefore, in a state where the notched portion 80 and the notched portion 53 are joined, a total width of the width W3 of the notched portion 80 and the width W5 of the notched portion 53 is substantially equal to the width W4 of the outer busbar 61 and the width W6 of the linear coil portion 51. Note that the notched portions 80 at the end portions 61f and 61g of the outer busbars 61 and at the end portions 71f and 71g of the inner busbars 71 are substantially equal to each other in width W3 in the radial direction.

As described above, the outer busbars 61 of the outer bus ring 60 and the inner busbars 71 of the inner bus ring 70 are disposed so as to avoid the linear coil portions 51 as viewed from the axial direction (Z1 direction side). That is, in a state where the notched portions 80 and the notched portions 53 are joined to each other, portions of the outer busbar 61 and inner busbar 71 other than the notched portions 80 are disposed so as to avoid the linear coil portions 51 as viewed from the axial direction.

Thus, because the outer busbar 61 and inner busbar 71 are disposed so as to avoid the linear coil portions 51 as viewed from the axial direction, the joint portions can be easily irradiated with laser light or an ultrasonic wave from outside in the axial direction. Furthermore, both the outer busbar 61 and the inner busbar 71 can be irradiated with laser light or an ultrasonic wave from outside in the axial direction at the same timing, because both the outer busbar 61 and the inner busbar 71 are disposed so as to avoid the linear coil portions 51. Therefore, the outer busbar 61 and the inner busbar 71 can be simultaneously joined, and thus it is possible to reduce an increase in time required to manufacture the stator 1100.

Note that other configurations of the second embodiment are similar to configurations of the first embodiment.

### (Method for manufacturing stator)

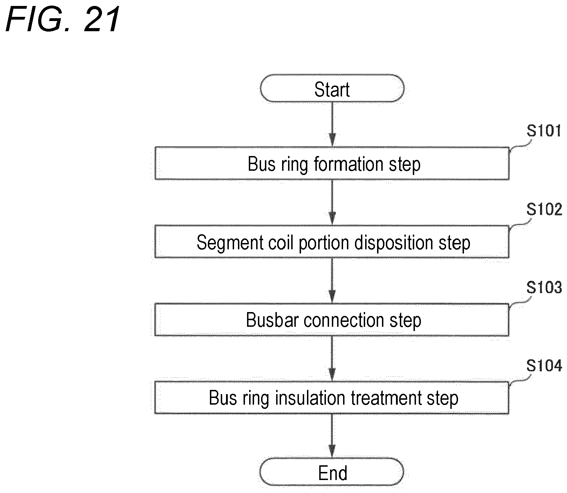

Next, a method for manufacturing the stator 1100 will be described with reference to FIG. 21.

### (Bus ring formation step)

As shown in FIG. 21, first, in Step S101, a step of forming each of the outer bus ring 60 and the inner bus ring 70 is performed. Specifically, the outer bus ring 60 is formed by combining the plurality of outer busbars 61, and the inner bus ring 70 is formed by combining the plurality of inner busbars 71. By, for example, holding the plurality of outer busbars 61 and the plurality of inner busbars 71 together with jigs or the like, the outer bus ring 60 and the inner bus ring 70 are formed as a subassembly member before being joined to the segment coil portion 50. Specifically, by integrally holding the outer bus ring 60 and the inner bus ring 70 with common jigs, a subassembly member is formed, in which the outer bus ring 60 and the inner bus ring 70 are integrally formed. Thus, because the outer bus ring 60 and the inner bus ring 70 are formed as a subassembly member combined in advance, it is possible to easily dispose (position) the outer bus ring 60 and the inner bus ring 70 at joint positions when the outer bus ring 60 and the inner bus ring 70 are joined to the segment coil portion 50. Therefore, it is possible to reduce work load of work of joining the outer bus ring 60 and the inner bus ring 70 to the segment coil portion 50. Note that each of the outer bus ring 60 and the inner bus ring 70 may be formed as separate subassembly members.

### (Segment coil portion disposition step)

Next, in Step S102, the segment coil portion 50 including the plurality of linear coil portions 51 is disposed such that four or more of the plurality of linear coil portions 51 is disposed side by side in each of the plurality of slots 11 of the stator core 10 extending in the axial direction (Z direction), along the radial direction (R direction) of the stator core 10, and that the protrusion 52 of each of the plurality of linear coil portions 51 protrudes from the slot 11 to one side (Z1 direction side) in the axial direction. Specifically, the segment coil portion 50 is disposed such that, in each of the plurality of slots 11, the protruding lengths L11a and L11b of the protrusions 52 of the respective outermost coil portion 51a and the innermost coil portion 51b in the axial direction are shorter than the protruding lengths L12a and L12b of the protrusions 52 of the intermediate coil portions 51c and 51d in the axial direction.

### (Busbar connection step and busbar insulation step)

Next, in Step S103, as with Step S2 of the first embodiment, the outer busbar 61 and the inner busbar 71 are connected to the linear coil portion 51. Then, in Step S104, as with Step S3 of the first embodiment, insulation treatment is performed on each of the outer bus ring 60 and the inner bus ring 70.

### [Third embodiment]

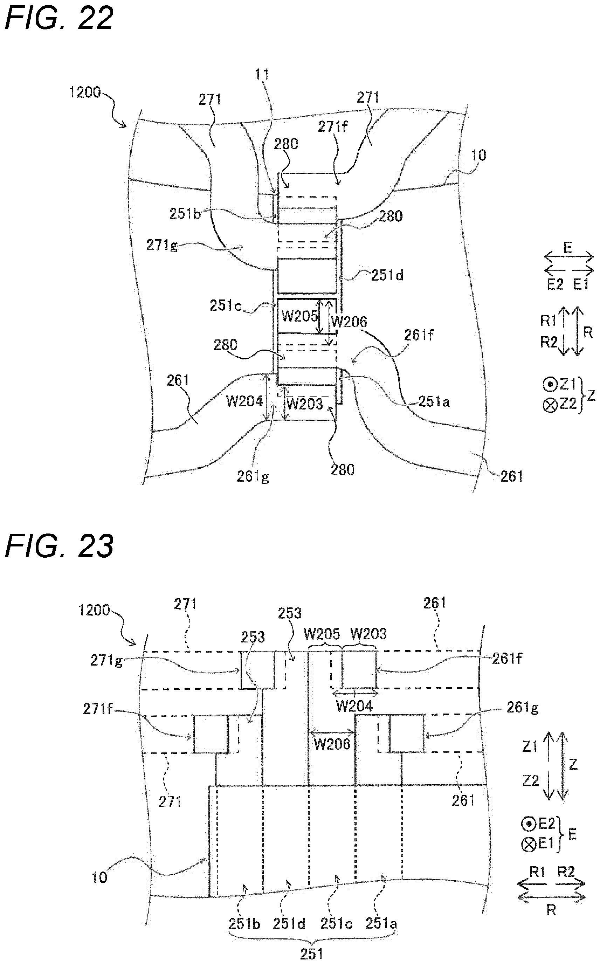

Next, a stator 1200 according to a third embodiment will be described with reference to FIGS. 22 and 23. In the third embodiment, a width W203 of a notched portion 280 of an outer busbar 261 and notched portion 280 of an inner busbar 271 in a radial direction (R direction) is configured to be wider than half a width W204 of a portion other than the notched portion 280 of the outer busbar 261 (inner busbar 271) as viewed from an axial direction, unlike the second embodiment in which the width W3 (thickness) of the notched portion 80 in the radial direction (R direction) is configured to be substantially half the width W4 of the portion other than the notched portion 80 of the outer busbar 61 (inner busbar 71) as viewed from the axial direction. Note that, in the drawings, components similar to components in the first embodiment and second embodiment described above are denoted by the same reference signs, and description thereof will be omitted.

As shown in FIGS. 22 and 23, as with the stator 1100 of the second embodiment, in the stator 1200, in each of a plurality of slots 11 of the stator core 10, four coil portions, which are an innermost coil portion 251b, an intermediate coil portion 251d, an intermediate coil portion 251c, and an outermost coil portion 251a, are disposed side by side in this order from the radial direction (R direction).

Furthermore, an end portion 261f of an outer busbar 261 is connected to a side surface 52e side of the intermediate coil portion 251c, and an end portion 261g of an outer busbar 261 is connected to a side surface 52d side of the outermost coil portion 251a. Furthermore, an end portion 271f of an inner busbar 271 is connected to a side surface 52e side of the innermost coil portion 251b, and an end portion 271g of an inner busbar 271 is connected to a side surface 52d side of the intermediate coil portion 251d. Other configurations of the outer busbar 261 and the inner busbar 271 are similar to configurations of the outer busbar 61 and inner busbar 71 of the second embodiment. Note that the outer busbar 261 and the inner busbar 271 are an example of a "busbar" in the claims. Furthermore, the end portion 261f and the end portion 271f are an example of "both end portions" and "first end portion" in the claims. Furthermore, the end portion 261g and the end portion 271g are an example of "both end portions" and "second end portion" in the claims.

Then, as with the second embodiment, the end portion 261f and end portion 261g of the outer busbars 261, and the end portion 271f and end portion 271g of the inner busbars 271 are provided with a notched portion 280 that is partially notched. Similarly, a linear coil portion 251 (outermost coil portion 251a, innermost coil portion 251b, intermediate coil portion 251c, and intermediate coil portion 251d) is also provided with a notched portion 253. Note that the notched portion 280 is an example of a "busbar-side notched portion" in the claims. Furthermore, the notched portion 253 is an example of a "connection portion-side notched portion" in the claims.

Here, unlike the second embodiment, a thickness (width W203) of the notched portion 280 in the radial direction (R direction) is thicker than half a width W204 of a portion other than the notched portions 280 of the outer busbars 261 and inner busbars 271 as viewed from the axial direction (Z direction).

Thus, because the width W203 of the notched portions 280 is wider than half (equal to or more than half) the width W204, by which volume of conductors at joint portions can be increased, electrical resistance at the joint portions can be reduced. Therefore, electrical loss at the joint portions can be further reduced, and heat generation at the joint portions can be further reduced.

Note that, because the width W203 of the notched portions 280 is wider than half of the width W204, the notched portions 280 (end portion 261f and end portion 271g) connected to the intermediate coil portions 251c and 251d are disposed so as to overlap the outermost coil portion 251a and the innermost coil portion 251b as viewed from the axial direction (Z direction). Here, of the four linear coil portions 251, the protruding lengths L12a and L12b of the two intermediate coil portions 251c and 251d are longer than the protruding lengths L11a and L11b of the outermost coil portion 251a and innermost coil portion 251b. Therefore, even in a case where the width W203 of the notched portions 280 connected to the intermediate coil portions 251c and 251d is increased, the notched portions 280 can be prevented from coming into contact with the outermost coil portion 251a and the innermost coil portion 251b.

Note that, similarly, a thickness (width W205) of the notched portion 253 of a linear coil portion 251 in the radial direction (R direction) is thicker than half a width W206 of a portion other than the notched portion 253 of the linear coil portion 251. Thus, because volume of conductors at joint portions can be further increased, electrical resistance at the joint portions can be further reduced. Therefore, electrical loss at the joint portions can be even further reduced, and heat generation at the joint portions can be even further reduced. Note that other configurations of the third embodiment are similar to configurations of the second embodiment.

### [Modifications]

Note that it should be construed that the embodiments disclosed herein are by way of illustration in all respects, not by way of limitation. It is intended that the scope of the present invention is defined by claims, not by the description above, and encompasses all modifications and variations equivalent in meaning and scope to the claims.

For example, in the first to third embodiments, there have been described examples in which four linear coil portions 21 (51, 251) are disposed on each of the plurality of slots 11. However, the present invention is not limited thereto. An even number of six or more linear coil portions may be disposed on each of the plurality of slots 11.

Specifically, as shown in FIG. 9, six linear coil portions 121 are provided in slots 111. In each of the plurality of slots 111, of the six linear coil portions 121, the closer the linear coil portion 121 is to a center, the longer the protruding length of the protrusion 122 thereof is. Thus, work can be easily performed on a linear coil portion 121 near the center of the six linear coil portions 121 from both the radially inner side and the radially outer side.

Specifically, the linear coil portions 121 include an outermost coil portion 121a, an innermost coil portion 121b, an intermediate coil portion 121c, an intermediate coil portion 121d, an intermediate coil portion 121e, and an intermediate coil portion 121f. The linear coil portions 121 of the slots 111 are disposed side by side in order of the outermost coil portion 121a, the intermediate coil portion 121c, the intermediate coil portion 121d, the intermediate coil portion 121e, the intermediate coil portion 121f, and the innermost coil portion 121b, from the radially outer side (R2 side). An outermost coil portion 121a and an intermediate coil portion 121c that are in slots 111 different from each other are connected by an outer busbar 41. Furthermore, an intermediate coil portion 121d and an intermediate coil portion 121e that are in slots 111 different from each other are connected by an outer busbar 41. Furthermore, an innermost coil portion 121b and an intermediate coil portion 121f that are in slots 111 different from each other are connected by an inner busbar 43. A protrusion length of each of the outermost coil portion 121a and the innermost coil portion 121b from a stator core 110 is a protruding length L111. A protrusion length of each of the intermediate coil portion 121c and the intermediate coil portion 121f from the stator core 110 is a protruding length L112, which is longer than the protruding length L111. A protruding length L113 of the intermediate coil portion 121d is longer than the protruding length L112. A protruding length L114 of the intermediate coil portion 121e is longer than the protruding length L113.

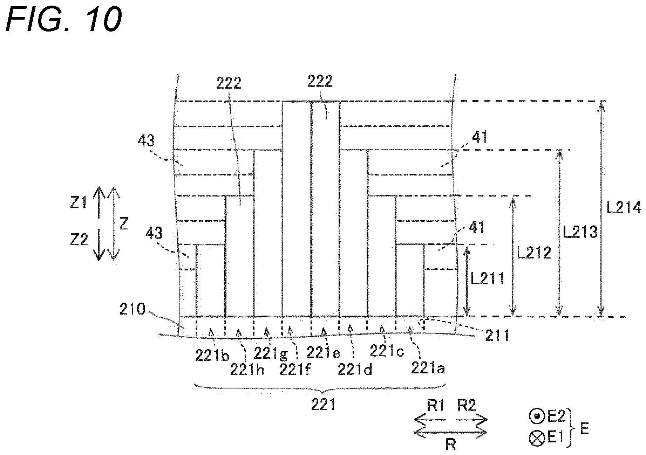

Furthermore, as shown in FIG. 10, eight linear coil portions 221 are provided in slots 211. In each of the plurality of slots 211, of the eight linear coil portions 221, the closer the linear coil portion 221 is to a center, the longer the protruding length of the protrusion 222 thereof is. The linear coil portions 221 include an outermost coil portion 221a, an innermost coil portion 221b, an intermediate coil portion 221c, an intermediate coil portion 221d, an intermediate coil portion 221e, an intermediate coil portion 221f, an intermediate coil portion 221g, and an intermediate coil portion 221h. The linear coil portions 221 of the slots 211 are disposed side by side in order of the outermost coil portion 221a, the intermediate coil portion 221c, the intermediate coil portion 221d, the intermediate coil portion 221e, the intermediate coil portion 221f, the intermediate coil portion 221g, the intermediate coil portion 221h, and the innermost coil portion 221b, from the radially outer side (R2 side). An outermost coil portion 221a and an intermediate coil portion 221c that are in slots 211 different from each other are connected by an outer busbar 41. Furthermore, an intermediate coil portion 221d and an intermediate coil portion 221e that are in slots 211 different from each other are connected by an outer busbar 41. Furthermore, an innermost coil portion 221b and an intermediate coil portion 221h that are in slots 211 different from each other are connected by an inner busbar 43. Furthermore, an intermediate coil portion 221g and an intermediate coil portion 221f that are in slots 211 different from each other are connected by an inner busbar 43. A protrusion length of each of the outermost coil portion 221a and the innermost coil portion 221b from a stator core 210 is a protruding length L211. A protrusion length of each of the intermediate coil portion 221c and the intermediate coil portion 221h from the stator core 210 is a protruding length L212, which is longer than the protruding length L211. A protrusion length of each of the intermediate coil portion 221d and the intermediate coil portion 221g from the stator core 210 is a protruding length L213, which is longer than the protruding length L212. A protrusion length of each of the intermediate coil portion 221e and the intermediate coil portion 221f from the stator core 210 is a protruding length L214, which is longer than the protruding length L213.

Furthermore, an even number of 10 or more linear coil portions may be disposed on each of the plurality of slots.

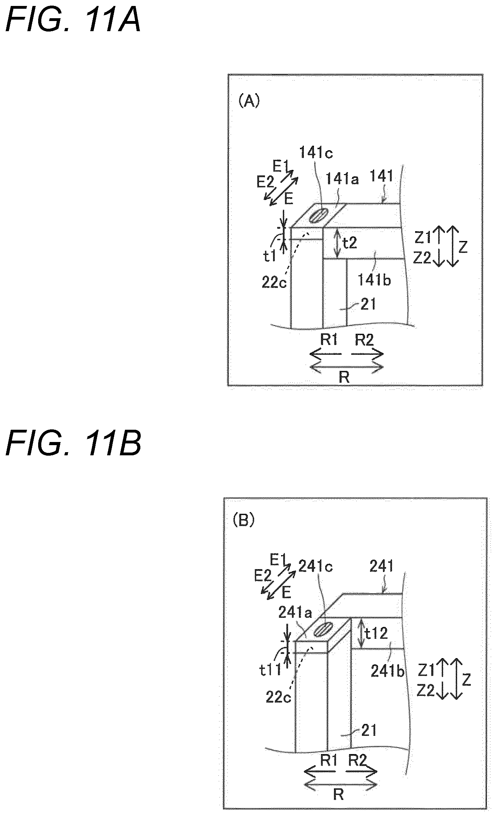

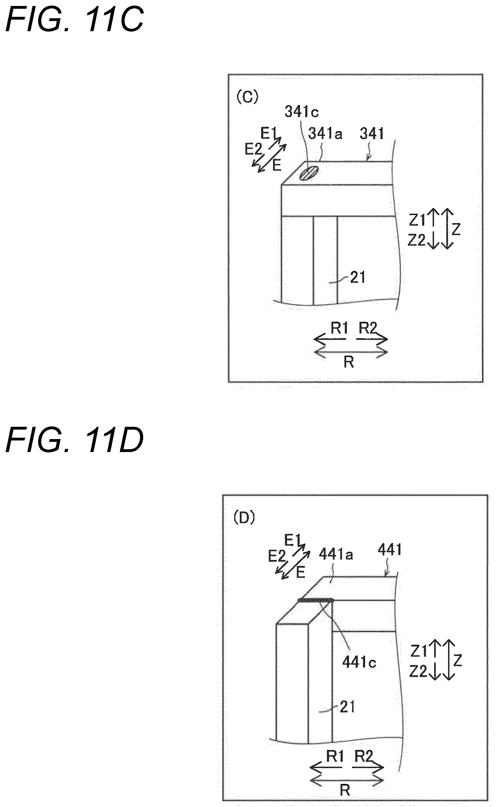

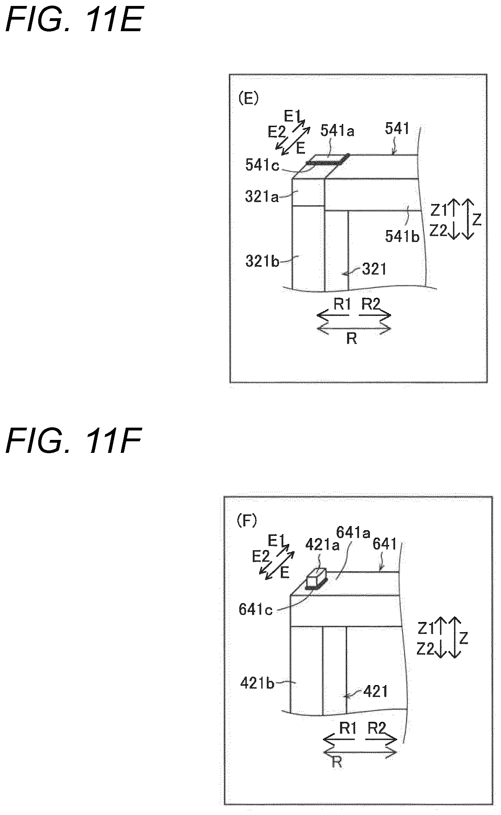

Furthermore, in the first embodiment, there has been described an example in which the outer busbar 41 (inner busbar 43) is connected only to the outer side surface 22a (inner side surface 22b) of the linear coil portions 21. However, the present invention is not limited thereto. The outer busbar 41 (inner busbar 43) may be connected to a surface other than the outer side surface 22a (inner side surface 22b) of the linear coil portions 21. In FIG. 11, as an example, only connections between an outer busbar and a linear coil portion is shown, and connections between an inner busbar and a linear coil portion similar to the connections of the outer busbar is not shown.

For example, as shown in FIG. 11A, an outer busbar 141 includes a tip end portion 141a having a flat plate shape and being in contact, in the axial direction (Z direction), with the end surface 22c of the linear coil portion 21 in the axial direction, and a main body portion 141b connected to the tip end portion 141a. The main body portion 141b is in contact with the linear coil portion 21 in the radial direction (R direction). A thickness t1 of the tip end portion 141a in the axial direction is thinner than a thickness t2 of the main body portion 141b in the axial direction. By irradiating a laser irradiation region 141c (hatched portion) of the tip end portion 141a with laser light from the Z1 side, the outer busbar 141 (tip end portion 141a) and the linear coil portion 21 are connected (joined). Note that the outer busbar 141 is an example of a "busbar" in the claims.

Furthermore, as shown in FIG. 11B, an outer busbar 241 includes a tip end portion 241a having a flat plate shape and being in contact, in the axial direction (Z direction), with the end surface 22c of the linear coil portion 21 in the axial direction, and a main body portion 241b connected to the tip end portion 241a. The main body portion 241b is in contact with the linear coil portion 21 in the circumferential direction (E direction). A thickness t11 of the tip end portion 241a in the axial direction is thinner than a thickness t12 of the main body portion 241b in the axial direction. By irradiating a laser irradiation region 241c (hatched portion) of the tip end portion 241a with laser light from the Z1 side, the outer busbar 241 (tip end portion 241a) and the linear coil portion 21 are connected (joined). Note that the outer busbar 241 is an example of a "busbar" in the claims.

Furthermore, as shown in FIG. 11C, a tip end portion 341a of an outer busbar 341 is in contact, in the axial direction (Z direction), with the end surface 22c of the linear coil portion 21 in the axial direction. A thickness of the outer busbar 341 in the axial direction is uniform. By irradiating a laser irradiation region 341c (hatched portion) of the tip end portion 341a with laser light from the Z1 side, the outer busbar 341 (tip end portion 341a) and the linear coil portion 21 are connected (joined). Note that the outer busbar 341 is an example of a "busbar" in the claims.

As shown in FIGS. 11A to 11C, the outer busbar 141 (241, 341) is connected to the end surface 22c of the linear coil portion 21, by which work such as the laser irradiation can be performed in a state where the outer busbar 141 (241, 341) is placed on the end surface 22c, and therefore, the work such as the laser irradiation can be more stably and easily performed.

Furthermore, as shown in FIG. 11D, a tip end portion 441a of an outer busbar 441 is connected to a side surface (not labeled) in the circumferential direction (E direction) of the linear coil portion 21. By irradiating a boundary surface 441c (thick line portion) between the outer busbar 441 and the linear coil portion 21 with laser light from the Z1 side, the outer busbar 441 and the linear coil portion 21 are connected (joined). Note that the outer busbar 441 is an example of a "busbar" in the claims.

Furthermore, as shown in FIG. 11E, an outer busbar 541 includes a tip end portion 541a connected to a tip end portion 321a (to be described later) of a linear coil portion 321 in the circumferential direction, and a main body portion 541b connect to the tip end portion 541a. The main body portion 541b is connected to the tip end portion 321a of the linear coil portion 21 in the radial direction. The linear coil portion 321 includes the tip end portion 321a on the Z1 side and a main body portion 321b connected to the tip end portion 321a. By irradiating a boundary surface 541c (thick line portion) between the outer busbar 541 and the linear coil portion 321 with laser light from the Z1 side, the outer busbar 541 and the linear coil portion 321 are connected (joined). The boundary surface 541c has an L shape as viewed from the axial direction. Note that the outer busbar 541 is an example of a "busbar" in the claims.

Furthermore, as shown in FIG. 11F, a linear coil portion 421 includes a tip end portion 421a, and a main body portion 421b connected to the tip end portion 421a. The tip end portion 421a of the linear coil portion 421 is provided so as to penetrate a tip end portion 641a of an outer busbar 641. By irradiating a boundary surface 641c (thick line portion) between the outer busbar 641 and the linear coil portion 421 with laser light from the Z1 side, the outer busbar 641 (tip end portion 641a) and the linear coil portion 321 are connected (joined). The boundary surface 641c has an L shape as viewed from the axial direction. Note that the outer busbar 641 is an example of a "busbar" in the claims.

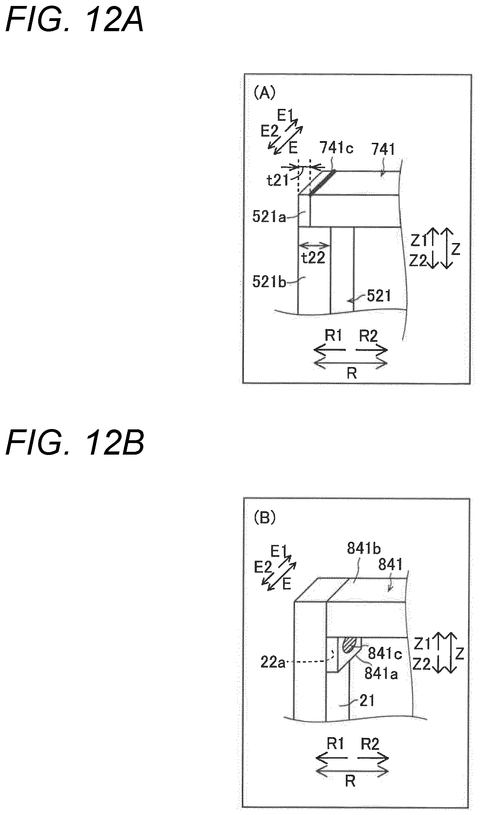

Furthermore, as shown in FIG. 12A, a linear coil portion 521 includes a tip end portion 521a having a flat plate shape and provided on the Z1 side, and a main body portion 521b connected to the tip end portion 521a. A thickness t21 of the tip end portion 521a in the radial direction is thinner than a thickness t22 of the main body portion 521b in the radial direction. An outer busbar 741 is connected to the tip end portion 521a in the radial direction. By irradiating a boundary surface 741c (thick line portion) between the outer busbar 741 and the linear coil portion 521 with laser light from the Z1 side, the outer busbar 741 and the linear coil portion 521 are connected (joined). Note that the outer busbar 741 is an example of a "busbar" in the claims.

Furthermore, as shown in FIG. 12B, an outer busbar 841 includes a tip end portion 841a connected to the outer side surface 22a of the linear coil portion 21 in the radial direction (R direction), and a main body portion 841b connect to the tip end portion 841a. The tip end portion 841a is provided to extend toward a Z2 side from an end portion of the main body portion 841b, the end portion being in contact with the linear coil portion 21. By irradiating a laser irradiation region 841c (hatched portion) of the tip end portion 841a with laser light from the radially outward (R2 side), the tip end portion 841a and the linear coil portion 21 are connected (joined). Note that the outer busbar 841 is an example of a "busbar" in the claims.

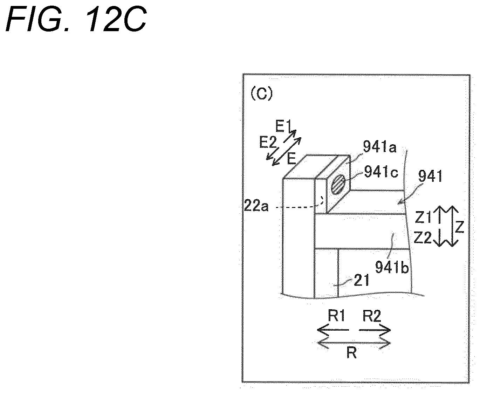

Furthermore, as shown in FIG. 12C, an outer busbar 941 includes a tip end portion 941a connected to the outer side surface 22a of the linear coil portion 21 in the radial direction (R direction), and a main body portion 941b connect to the tip end portion 941a. The tip end portion 941a is provided to extend toward the Z1 side from an end portion of the main body portion 941b, the end portion being in contact with the linear coil portion 21. By irradiating a laser irradiation region 941c (hatched portion) of the tip end portion 941a with laser light from the radially outward (R2 side), the tip end portion 941a and the linear coil portion 21 are connected (joined). Note that the outer busbar 941 is an example of a "busbar" in the claims.

Furthermore, in the first to third embodiments, there have been described examples in which the segment coil portion 20 (50) is formed of copper, and the outer bus ring 40 (60) and the inner bus ring 42 (70) are formed of aluminum. However, the present invention is not limited thereto. The segment coil portion 20 (50) may be formed of copper, and the outer bus ring 40 (60) and the inner bus ring 42 (70) may be formed of copper. Furthermore, the segment coil portion 20 (50) may be formed of aluminum, and the outer bus ring 40 (60) and the inner bus ring 42 (70) may be formed of aluminum.

Furthermore, in the first embodiment, there has been described an example in which a size of the outer busbar 41 and a size of the inner busbar 43 are different from each other. However, the present invention is not limited thereto. The size of the outer busbar 41 and the size of the inner busbar 43 may be equal to each other.

Furthermore, in the first to third embodiments, there have been described examples in which the protrusions 22 (52) are connected to each of the outer busbar 41 (60) and the inner busbar 43 (70) by laser irradiation. However, the present invention is not limited thereto. For example, the protrusions 22 (52) and each of the outer busbar 41 (60) and the inner busbar 43 (70) may be connected by ultrasonic joining.

Furthermore, in the second and third embodiments, there have been described examples in which the side surface 52e (circumferential side surface) connected to the end portion 61f, 261f (first end portion) of the outer busbar 61, 261 (busbar) and the end portion 71f, 271f (first end portion) of the inner busbar 71, 271 (busbar), and the side surface 52d connected to the end portion 61g, 261g (second end portion) of the outer busbar 61, 261 and the end portion 71g, 271g (second end portion) of the inner busbar 71, 271 (busbar) are provided so as to face each other along the circumferential direction. However, the present invention is not limited thereto. In the present invention, the circumferential side surface connected to the first end portion and the circumferential side surface connected to the second end portion may be disposed on a common direction side in the circumferential direction. In this case, when the plurality of busbars is connected to the linear coil portions, the entire busbars connected to the plurality of linear coil portions can be held from a common direction in each of the plurality of slots. Therefore, it is possible to reduce work load when joining the plurality of busbars.

Furthermore, in the second and third embodiments, there have been described examples in which the outer busbar 61 (261) connected to the outermost coil portion 51a (251a) and intermediate coil portion 51c (251c) has the notched portion 80, 280 (busbar-side notched portion) obtained by notching a radially inner side (R1 direction side) of the end portion 61f (261f) and 61g (261g), and the inner busbars 71 (271) connected to the innermost coil portion 51b (251b) and intermediate coil portion 51d (251d) has the notched portion 80, 280 (busbar-side notched portion) obtained by notching a radially outer side (R2 direction side) of the end portion 71f (271f) and end portion 71g (271g). However, the present invention is not limited thereto. In the present invention, both end portions of a plurality of busbars of an outer bus ring may be provided with busbar-side notched portions obtained by notching radially outer sides thereof, and both end portions of a plurality of busbars of an inner bus ring may be provided with busbar-side notched portions obtained by notching radially inner sides thereof. In this case, the radially inner side is notched for the outermost coil portion and the intermediate coil portion adjacent to the outermost coil portion, and the radially outer side is notched for the innermost coil portion and the intermediate coil portion adjacent to the innermost coil portion. Thus, because when joined to the linear coil portions, the plurality of busbars can be disposed such that the busbar-side notched portions are sandwiched between the connection portion-side notched portions of the linear coil portions, the plurality of busbars can be easily positioned with respect to the linear coil portions. Therefore, it is possible to reduce work load of work of joining the plurality of busbars to the linear coil portions.

Furthermore, in the second and third embodiments, there have been described examples in which the notched portion 80, 280 (busbar-side notched portion) is provided on the end portion 61f, 261f and end portion 61g, 261g (both end portions) of the outer busbar 61, 261 (busbar), and on the end portion 71f, 271f and end portion 71g, 271g (both end portions) of the inner busbar 71, 271 (busbar). However, the present invention is not limited thereto. In the present invention, busbar-side notched portions may not be provided on both end portions of a busbar. That is, end surfaces on the circumferential direction side of the both end portions of the busbar may be joined to circumferential side surfaces of protrusions of linear coil portions. Thus, it is possible to save time and effort to process shapes of the joint portions of the busbar to provide the busbar-side notched portions. Furthermore, only the busbar-side notched portions may be provided without providing connection portion-side notched portions.

Furthermore, in the second and third embodiments, there have been described examples in which a lap-wound coil is formed by connecting the segment coil portion 50, the outer bus ring 60, and the inner bus ring 70. However, the present invention is not limited thereto. In the present invention, a wave-wound coil may be formed by connecting a segment coil portion and a busbar member (outer bus ring and inner bus ring). In this case also, by changing configurations of coil end portions of the segment coil portions, linear coil portions and the busbar member can be common to a lap winding structure.

### REFERENCE SIGNS LIST

10, 110, 210: Stator core, 11, 111, 211: Slot, 20, 50: Segment coil portion, 21, 51, 121, 221, 251, 321, 421: Linear coil portion, 21a, 51a, 121a, 221a, 251a: Outermost coil portion, 21b, 51b, 121b, 221b, 251b: Innermost coil portion, 21c, 51c, 51d, 121c, 121d, 121e, 121f, 221c, 221d, 221e, 221f, 221g, 221h, 251c, 251d: Intermediate coil portion, 22, 52, 122, 222: protrusion, 22a: Outer side surface (connection portion) (radial side surface), 22b: Inner side surface (connection portion) (radial side surface), 22c: End surface (end surface of protrusion), 40, 60: Outer bus ring (busbar member), 41, 61, 141, 241, 261, 341, 441, 541, 641, 741: Outer busbar (busbar), 42, 70: Inner bus ring (busbar member), 43, 71, 271: Inner busbar (busbar), 52d, 52e: Side surface (connection portion) (circumferential side surface), 53, 253: Notched portion (connection portion-side notched portion), 61f, 71f, 261f, 271f: end portion (both end portions) (first end portion), 61g, 71g, 261g, 271g: end portion (both end portions) (second end portion), 80, 280: Notched portion (busbar-side notched portion), 100, 1100, 1200: Stator, L11, L11a, L11b, L111, L211: Protruding length (protruding lengths of innermost coil portion and outermost coil portion), and L12, L12a, L12b, L 112, L113, L114, L212, L213, L214: Protruding length (protruding length of intermediate coil portion)

## Claims

1. A stator comprising:
a stator core including a plurality of slots extending in an axial direction;
a segment coil portion including, in each of the plurality of slots, a plurality of linear coil portions disposed side by side in four or more along a radial direction of the stator core and linearly extending along the axial direction, in which each of the plurality of linear coil portions has a protrusion protruding from the slot to one side in the axial direction; and
a busbar member including a plurality of busbars connecting to each other connection portions provided on the protrusions of the linear coil portions disposed on the slots different from each other,
wherein
in each of the plurality of slots, a protruding length, in the axial direction, of each of the protrusions of an outermost coil portion that is the linear coil portion on a radially outermost side and of an innermost coil portion that is the linear coil portion on a radially innermost side is shorter than a protruding length, in the axial direction, of the protrusions of intermediate coil portions that are the linear coil portions disposed between the outermost coil portion and the innermost coil portion.

2. The stator according to claim 1, wherein the plurality of linear coil portions is disposed such that, in each of the plurality of slots, protruding lengths of respective the protrusions of the outermost coil portion and the innermost coil portion in the axial direction are substantially the same and are shorter than protruding lengths of the protrusions of the intermediate coil portions in the axial direction.

3. The stator according to claim 2,
wherein
the segment coil portion includes, in each of the plurality of slots, the linear coil portions disposed side by side in four along the radial direction, and
the plurality of linear coil portions is, in each of the plurality of slots, disposed such that protruding lengths of the protrusions of respective the intermediate coil portions in the axial direction are substantially the same.

4. The stator according to any one of claims 1 to 3,
wherein
each of the connection portions includes a radial side surface provided so as to be orthogonal to the radial direction on one side of the protrusions in the axial direction,
the radial side surface includes an outer radial direction side surface provided on one side of the protrusions in the axial direction so as to face a radially outer side, and an inner radial direction side surface provided on one side of the protrusions in the axial direction so as to face a radially inner side,
the busbar member includes an outer bus ring having an annular shape and including a plurality of the busbars connecting, to each other from a radially outer side, the outer radial direction side surfaces of the protrusions of the slots different from each other, and an inner bus ring having an annular shape and including a plurality of the busbars connecting, to each other from a radially inner side, the inner radial direction side surfaces of the protrusions of the slots different from each other, and
each of the outer bus ring and the inner bus ring is disposed so as to avoid the intermediate coil portions as viewed from the axial direction.

5. The stator according to any one of claims 1 to 3,
wherein
the connection portions include circumferential side surfaces provided so as to be orthogonal to a circumferential direction of the stator core, and
the busbar member includes the plurality of busbars connecting to each other the circumferential side surfaces provided on the protrusions of the linear coil portions disposed on the slots different from each other, and is disposed so as to avoid the linear coil portions as viewed from the axial direction.

6. The stator according to claim 5,
wherein
the busbars include both end portions extending along one side and another side of the circumferential direction,
the both end portions abut on the circumferential side surface, and have a first end portion connected to the circumferential side surface of the connection portion of one the linear coil portions, and a second end portion connected to the circumferential side surface of the connection portion of another the linear coil portions, and
the circumferential side surface of the connection portion of one the linear coil portions, the connection portion being connected to the first end portion, and the circumferential side surface of the connection portion of another the linear coil portions, the connection portion being connected to the second end portion, are provided so as to face each other along the circumferential direction.

7. The stator according to claim 6,
wherein
the both end portions of the busbars have a busbar-side notched portion that is partially notched, and
the busbar-side notched portion is connected to the connection portion so as to have an L-shaped connection surface along the radial direction and the circumferential direction as viewed from the axial direction.

8. The stator according to claim 7,
wherein
the connection portion of the linear coil portions has a connection portion-side notched portion that is partially notched, and
the connection portion-side notched portion is connected so as to engage with the busbar-side notched portion, so as to have an L-shaped connection surface along the radial direction the and axial direction as viewed from the circumferential direction.

9. The stator according to any one of claims 1 to 8,
wherein
the segment coil portions are formed of copper, and
the busbar member is formed of aluminum.

10. A method for manufacturing a stator, the method comprising:
a step of disposing a segment coil portion including, in each of a plurality of slots extending of a stator core in an axial direction, a plurality of linear coil portions, such that a plurality of linear coil portions linearly extending along the axial direction is disposed side by side in four or more along a radial direction of the stator core, and that each of protrusions of the plurality of linear coil portions protrudes from each of the slots to one side in the axial direction; and
a step of connecting, to connection portions of the linear coil portion, each of a plurality of busbars connecting to each other the connection portions provided on the protrusions of the linear coil portions disposed on the slots different from each other,
wherein
the step of disposing the segment coil portion includes a step of disposing the segment coil portion, such that, in each of the plurality of slots, a protruding length, in the axial direction, of each of the protrusions of an outermost coil portion that is the linear coil portion on a radially outermost side and of an innermost coil portion that is the linear coil portion on a radially innermost side is shorter than a protruding length, in the axial direction, of the protrusions of intermediate coil portions that are the linear coil portions disposed between the outermost coil portion and the innermost coil portion.

11. The method for manufacturing a stator according to claim 10, the method further comprising a step of forming a subassembly member by combining the plurality of busbars before a step of connecting each of the plurality of busbars to the connection portions of the linear coil portions.
